(19) Europäisches Patentamt
European Patent Office
Office européen des brevets

(11) **EP 3 032 392 B1**

(12) **EUROPEAN PATENT SPECIFICATION**

(45) Date of publication and mention
of the grant of the patent:
**24.07.2019 Bulletin 2019/30**

(21) Application number: **15199263.3**

(22) Date of filing: **10.12.2015**

(51) Int Cl.:
*G06F 3/0481* (2013.01)    *G06F 3/0485* (2013.01)
*H04N 5/44* (2011.01)

(54) **DISPLAY APPARATUS AND DISPLAY METHOD**

ANZEIGEEINHEIT UND ANZEIGEVERFAHREN

APPAREIL ET PROCÉDÉ D'AFFICHAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.12.2014 KR 20140179594
24.12.2014 KR 20140188636**

(43) Date of publication of application:
**15.06.2016 Bulletin 2016/24**

(73) Proprietor: **Samsung Electronics Co., Ltd.
Gyeonggi-do 16677 (KR)**

(72) Inventors:
• **LEE, Jin-ha
Seoul (KR)**
• **BAEK, Seung-cheon
Yongin-si (KR)**

(74) Representative: **Appleyard Lees IP LLP
15 Clare Road
Halifax HX1 2HY (GB)**

(56) References cited:
**EP-A2- 2 667 627**    **WO-A2-2011/046766**
**US-A- 5 874 936**    **US-A1- 2004 233 238**
**US-A1- 2009 235 207**    **US-A1- 2010 309 123**
**US-A1- 2011 126 148**    **US-A1- 2012 154 444**

# EP 3 032 392 B1

**Description**

BACKGROUND

**1. Field**

Apparatuses and methods consistent with exemplary embodiments relate to a display apparatus and a display method, and more particularly, to display apparatuses having a scrolling function and display methods performed by the display apparatuses.

**2. Description of the Related Art**

Display apparatuses have a function of displaying an image that can be watched by users. Users can watch a broadcast via a display apparatus. Display apparatuses display, on a display included therein, broadcasting that a user selects from broadcasting signals transmitted by a broadcasting station. Currently, most countries around the world have switched from analog broadcasting to digital broadcasting.

In digital broadcasting, a digital image signal and a digital audio signal are transmitted. When compared to analog broadcasting, digital broadcasting is resilient against external noise, thus having little data loss, is favorable with respect to error correction, and provides high-resolution and high-definition screen images. In addition, digital broadcasting can provide a bidirectional service, in contrast with analog broadcasting.

Smart televisions (TVs) providing various types of content in addition to a digital broadcasting function have been recently provided. Smart TVs aim to analyze and respond to user needs without manipulations by a user, that is, instead of a user manually operating the smart TVs to make a selection.

Also, smart TVs realizing scrolling have recently become available to provide users with more information by reinforcing interaction with users.

EP 2 667 627 shows an image display apparatus and method of operating the same, US 2009/235207 shows a method and system for managing resources on a wireless communication network.

**SUMMARY**

Exemplary embodiments address at least the above problems and/or disadvantages and other disadvantages not described above. Also, the exemplary embodiments may not be required to overcome the disadvantages described above, and may not overcome any of the problems described above.

One or more exemplary embodiments provide a display apparatus which provides an intuitive and natural scrolling experience, and a display method performed by the display apparatus.

According to an aspect of an exemplary embodiment, there is provided a display apparatus (100) comprising: a display (115); and a controller (180) configured to: calculate an actual position based on a user input; display a cursor (300), within a scrolling area, based on the calculated actual position indicated by a pointing position of a control device; in response to a user input for moving the cursor from within the scrolling area to outside of the scrolling area through a boundary of the scrolling area in which a plurality of content items (311-321) are displayed, determine a distance between the actual position calculated based on the user input for moving the cursor and the boundary of the scrolling area; and deform the shape of the cursor in response to the cursor contacting an edge of the display and scroll the plurality of content items (311-321) displayed in the scrolling area; wherein a magnitude of the deformation and scrolling speed is determined based on the said determined distance.

Further features of the present invention are set out in the amended claims.

**BRIEF DESCRIPTION OF THE DRAWINGS**

The above and/or other aspects will be more apparent by describing exemplary embodiments, with reference to the accompanying drawings, in which:

FIG. 1A is a schematic view showing an operation between a display apparatus and a control device in which a cursor is located in a center of a display screen, according to an exemplary embodiment;

FIG. 1B is a schematic view showing an operation between a display apparatus and a control device in which a cursor is located at an edge of a display screen, according to an exemplary embodiment;

FIG. 1C is a schematic view showing an operation between a display apparatus and a control device in which a cursor is located in a center of a scrolling area arranged in a portion of a display screen, according to an exemplary embodiment;

FIG. 1D is a schematic view showing an operation between a display apparatus and a control device according to an exemplary embodiment, where an cursor is located at an edge of a scrolling area arranged in a portion of a display screen;

FIG. 1E is a schematic view showing an operation between a display apparatus and a control device in which a cursor is located at an edge of a scrolling area arranged in a portion of a display screen, according to another exemplary embodiment;

FIG. 2 is a block diagram of a display apparatus according to an exemplary embodiment;

FIG. 3 is a block diagram of a detailed structure of a display apparatus according to an exemplary embodiment;

FIG. 4A is a structural block diagram of a control device according to an exemplary embodiment;

FIGS. 4B, 4C and 4D are diagrams of control devices according to exemplary embodiments;

FIG. 5 is a flowchart of a display method performed in a display apparatus, according to an exemplary embodiment;

FIGS. 6A and 6B illustrate reference diagrams for explaining deformation of a shape of a cursor when horizontal edge scrolling is performed, according to an exemplary embodiment;

FIGS. 7A and 7B illustrate reference diagrams for explaining deformation of a shape of a cursor when vertical edge scrolling is performed, according to an exemplary embodiment;

FIG. 8 is a reference diagram for explaining deformation of a shape of a cursor when edge scrolling is performed in a horizontal direction and a vertical direction, according to an exemplary embodiment;

FIGS. 9A, 9B and 9C illustrate reference diagrams for explaining a scrolling speed based on a scrolling distance, according to an exemplary embodiment;

FIGS. 10A and 10B illustrate reference diagrams for explaining a deformation value of a circular cursor according to an exemplary embodiment;

FIG. 11A and 11B illustrates reference diagrams for explaining a deformation value of a square cursor having rounded corners, according to an exemplary embodiment;

FIGS. 12A and 12B illustrates reference diagrams for explaining a deformation value of a square cursor according to an exemplary embodiment;

FIG. 13 is a flowchart of a display method performed in a display apparatus;

FIGS. 14A and 14B illustrate reference diagrams for explaining displaying scrolling items by deforming shapes of scrolling items based on a scrolling distance;

FIGS. 15A and 15B illustrate reference diagrams for explaining deformation of scrolling items when scrolling items are arranged horizontally;

FIGS. 16A and B illustrate reference diagrams for explaining deformation of scrolling items when scrolling items are arranged vertically;

FIG. 17 is a reference diagram for explaining item attributes that are addable to deformation of scrolling items;

FIG. 18A illustrates reference diagrams (a) through (g) for explaining a method of outputting scrolling items by deforming shapes of the scrolling items based on a scrolling distance;

FIG. 18B is a graph illustrating an interpolating curve Interp(t);

FIGS. 19A and 19B illustrate reference diagrams for explaining a scrolling direction;

FIGS. 20A and 20B illustrate reference diagrams for explaining a scrolling direction;

FIGS. 21A and 21B illustrate reference diagrams for explaining an example in which deformation of a cursor is applied to a multi-window screen based on a scrolling distance according to an exemplary embodiment; and

FIG. 22 illustrates a user interface for setting a degree of deformation of scrolling items.

## DETAILED DESCRIPTION

Exemplary embodiments are described in greater detail below with reference to the accompanying drawings.

In the following description, like drawing reference numerals are used for like elements, even in different drawings. The matters defined in the description, such as detailed construction and elements, are provided to assist in a comprehensive understanding of the exemplary embodiments. However, it is apparent that the exemplary embodiments can be practiced without those specifically defined matters. Also, well-known functions or constructions may not be described in detail because they would obscure the description with unnecessary detail.

It will be understood that the terms "comprises" and/or "comprising" used herein specify the presence of stated features or components, but do not preclude the presence or addition of one or more other features or components. In addition, the terms such as "unit", "-er (-or)", and "module" described in the specification refer to an element for performing at least one function or operation, and may be implemented in hardware, software, or the combination of hardware and software.

While such terms as "first", "second", etc., may be used to describe various components, such components may not be limited to the above terms. The above terms are used only to distinguish one component from another. For example, a first component discussed below could be termed a second component, and similarly, a second component may be termed a first component without departing from the teachings of this disclosure. The term "and/or" includes any and all combinations of one or more of the associated listed items.

Selection of a key arranged on a control device may be terminology that refers to pressing, touch, or drag of a key.

Content may include video, audio, text, or web documents.

A portion of a display of a display apparatus where actual content is output may be referred to as a screen.

An expression used in the singular encompasses the expression of the plural, unless it has a clearly different meaning in the context.

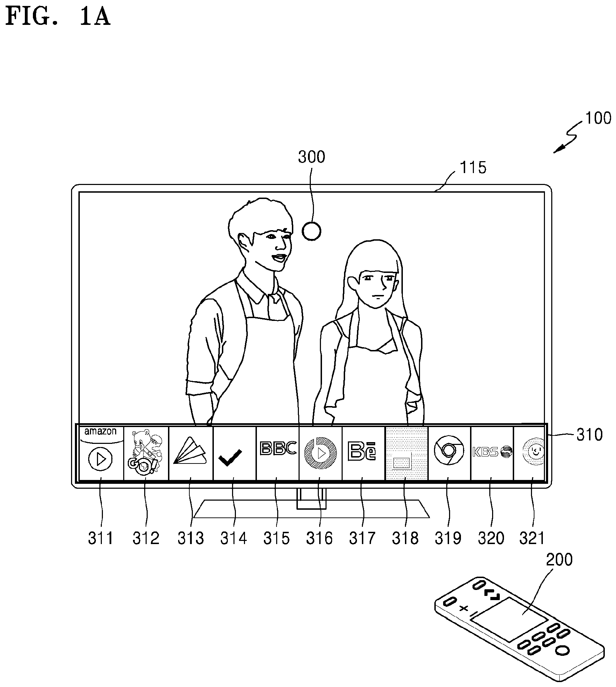

Hereinafter, a display operation according to exemplary embodiments will be described with reference to FIGS. 1A through 1E.

FIG. 1A is a schematic view showing an operation between a display apparatus 100 and a control device 200 in which a cursor 300 is located in a center of a display screen, according to an exemplary embodiment.

Referring to FIG. 1A, the display apparatus 100 and the control device 200 are capable of communicating with each other by wire or wirelessly.

The control device 200 may control the display apparatus 100 via short-range communication including infrared or Bluetooth communication. The control device 200 may be manipulated by a user to control a function of the display apparatus 100 by using at least one selected from keys (including buttons) included in the control device 200, a touch pad, a microphone capable of receiving voices of users, and a sensor capable of recognizing motions of the control device 200.

The control device 200 includes a power on/off button for turning on or off the display apparatus 100. The control device 200 may change a channel, adjust the volume, and select terrestrial broadcasting/cable broadcasting/satellite broadcasting, or perform setting of the display apparatus 100 according to a user input.

The display apparatus 100 may be implemented by using not only a flat display apparatus but also a curved display apparatus having a curvature or flexible display apparatus capable of adjusting a curvature. An output resolution of the display apparatus 100 may be, for example, a high definition (HD), a full HD, an ultra HD, or a resolution that is clearer than ultra HD.

The term "user" used herein denotes a person who controls a function or operation of the display apparatus 100 by using the control device 200. Examples of the user may include a viewer, a manager, or an installation engineer.

According to an exemplary embodiment, the display apparatus 100 may provide a video screen to a display 115 and a scrolling area 310 including a plurality of scrolling items 311 through 321 in a portion of the video screen. The scrolling area 310 is smaller than the full size of the display 115 in this embodiment. Referring to FIG. 1A, the scrolling area 310 including scrolling items 311 through 321 are provided on the display 115, and the cursor 300 corresponding to an input of the control device 200 is displayed on the display 115.

Scrolling refers to vertically or horizontally sliding a text, an image or a video on a monitor or a display of a computer display or a television product. Scrolling allows moving of a view of a user to show more of a text or an image, without changing a layout of the text or the image. Scrolling is performed via a central processing unit (CPU) or a graphic card of a computer.

Referring to FIG. 1A, the scrolling area 310 is provided at a lower end of a screen of the display 115, and scrolling items 311, 312, 313, 314, 315, 316, 317, 318, 319, 320, and 321, which are part of a scrolling list including a plurality of scrolling items, are displayed in the scrolling area 310.

The scrolling items may indicate content. Examples of items indicating content may include an item indicating image content such as a movie or drama, an item indicating audio content such as music, an item indicating an application, an item indicating a broadcasting channel, and an item indicating history information of contents executed by a user.

A plurality of items may be displayed as images. For example, an item indicating movie content or drama content may be displayed as a poster image of a movie or a drama. Also, an item indicating audio content such as music may be displayed as poster image of an album including the music. Also, an item indicating an application may be displayed as an image showing the application or a screen showing a last executed application. Also, an item indicating a broadcasting channel may be displayed as an image of a last screen of the broadcasting channel viewed by a user or an image indicating a program that is currently being broadcast in the broadcasting channel. Also, an item indicating history information of content executed by a user may be displayed as an image of a last executed screen of the content.

Also, scrolling items may indicate an interface for connecting the display apparatus 100 with an external device or an external device connected to the display apparatus 100. For example, an item indicating an interface for connecting to an external device may be an item indicating a port of an image display apparatus to which the external device is connected. For example, an item indicating an external device may include an item indicating High-Definition Multimedia Interface (HDMI) port, an item indicating a component jack, an item indicating a PC port, an item indicating a universal serial bus (USB) port, or the like. Also, an item indicating an external device may be an item indicating an external device connected to the interface.

A scrolling list including a plurality of scrolling items is usually longer than the scrolling area 310 that displays the scrolling items, and thus the scrolling area 310 may display only some of the scrolling items from the entire scrolling list. Thus, moving a cursor by bumping the cursor against a screen edge to continuously move to an area of scrolling items on the scrolling area 310 is called edge scrolling. Referring to FIG. 1A, when the user further scrolls from the left end of the scrolling area 310 by using the control device 200, for example, scrolling items that are arranged on the left side of the scrolling item 311 may be displayed in the scrolling area 310. Also, when the user further scrolls from the right end of the scrolling area 310 by using the control device 200, for example, scrolling items that are arranged on the right side of the scrolling item 321 may be displayed in the scrolling area 310.

The cursor 300 is an indicator that is used to indicate a position on a computer monitor or a display apparatus in response to a text input or a pointing device in a computing device. An indicator used to indicate a position on a display in response to an input of a pointing device such as a mouse is referred to as a pointer. Referring to FIG. 1A, when a user moves the control device 200 on a screen of the display 115, the cursor 300 is arranged on the screen of the display 115 to correspond to a position indicated by the control device 200.

Referring to FIG. 1A, the cursor 300 is displayed on the screen of the display 115 according to a pointing position of the control device 200. When the cursor 300 is displayed in a center portion of the screen of the display 115 that is not an edge thereof, the cursor 300 may be a circle shape that is the original form. However, the circular shape of the cursor 300 illustrated in FIG. 1A is an exemplary embodiment, and a cursor may have various shapes.

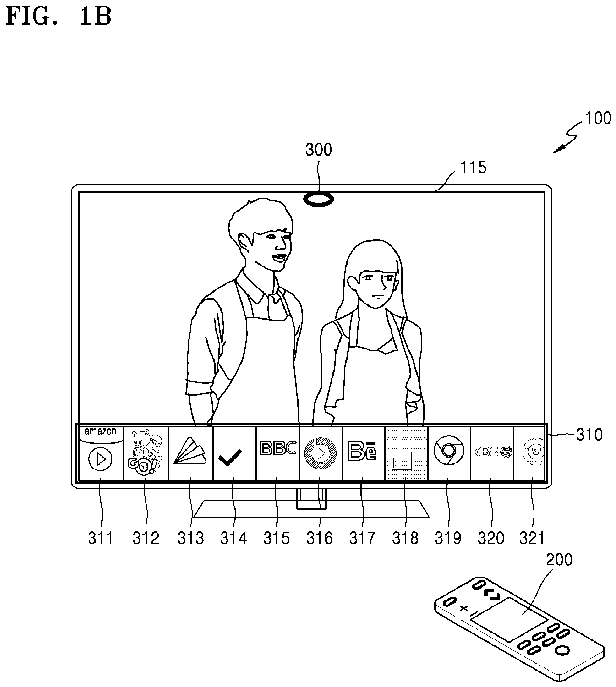

FIG. 1B is a schematic view showing an operation between the display apparatus 100 and the control device 200 in which the cursor 300 is located at an edge of a display screen, according to an exemplary embodiment.

Referring to FIG. 1B, when the cursor 300 contacts an edge of the screen of the display 115 according to a pointing position of the control device 200, the circular shape of the cursor 300 is squashed to an oval shape. That is, in response to the display 115 contacting the edge of the screen of the display 115 as a pointing position of the control device 200 is moved from the center to the edge of the screen of the display 115, the cursor 300 may be displayed by deforming the shape of the cursor 300 based on a scrolling distance of the control device 200.

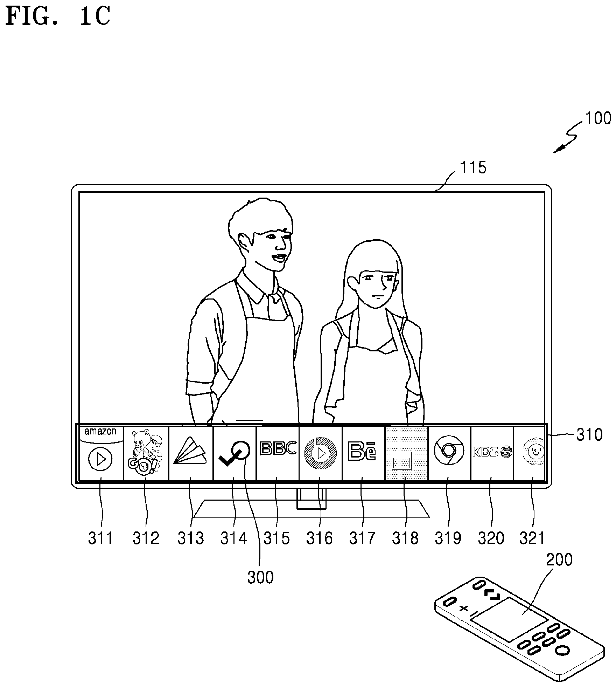

FIG. 1C is a schematic view showing an operation between the display apparatus 100 and the control device 200 in which the cursor 300 is located in a center of the scrolling area 310 arranged in a portion of a display screen, according to an exemplary embodiment.

Referring to FIG. 1C, according to a pointing position of the control device 200, the cursor 300 is displayed in a center of the scrolling area 310 instead of at an edge thereof at lower end of the display 115, and the cursor 300 having a circular shape that is the original form is displayed.

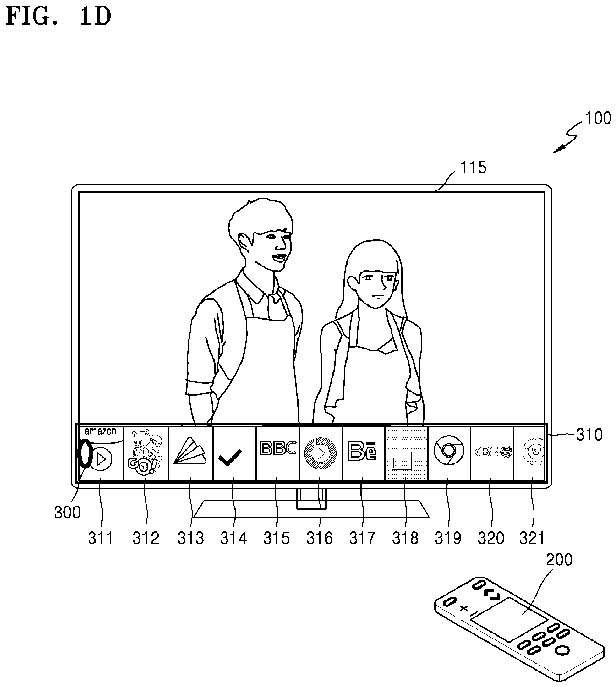

FIG. 1D is a schematic view showing an operation between the display apparatus 100 and the control device 200 in which the cursor 300 is located at an edge of a scrolling area 310 arranged in a portion of a display screen, according to an exemplary embodiment.

Referring to FIG. 1D, when scrolling is further performed to the left while the cursor 300 is contacting the edge of the scrolling area 310 arranged in a portion of the display 115 according to a pointing position of the control device 200, the circular shape of the cursor 300 is squashed to an oval shape. That is, in response to the cursor 300, which corresponds to the pointing position of the control device 200, contacting the edge of the scrolling area 310, the shape of the cursor 300 may be deformed based on a scrolling distance of the control device 200 to be output in an oval shape. If a scrolling distance is relatively great, the shape of the cursor 300 may be deformed by a relatively great amount, and if a scrolling distance is relatively short, the shape of the cursor 300 may be deformed by a relatively small amount. In this case, the edge of the screen of the display 115 and the edge of the scrolling area 310 correspond to each other. The position that the cursor would be at corresponding to where the pointer is pointing (i.e. if the cursor had not stopped) can be referred to as the virtual position of the cursor.

As described above with reference to FIGS. 1A through 1D, when the user moves the pointing position towards the edge of the screen of the display 115 by using the control device 200, the display apparatus 100 may output the cursor 300 by deforming the shape of the cursor 300 based on a scrolling distance of the control device 200, in response to the cursor corresponding to an input of the control device and contacting the edge of the screen. By deforming the shape of the cursor 300 according to an input of a user who is performing scrolling, the user may sense the cursor 300 which is a solid element as if it is an object having physical properties, and experience convenience and an intuitive response when performing edge scrolling.

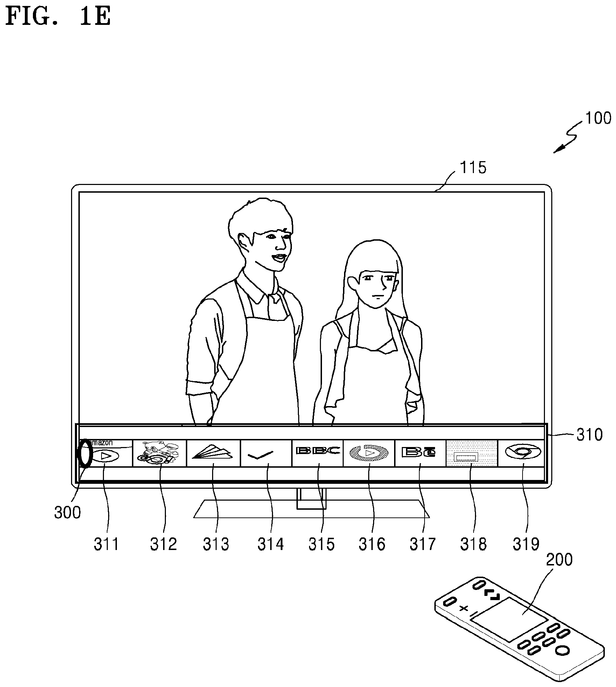

FIG. 1E is a schematic view showing an operation between the display apparatus 100 and the control device 200 in which the cursor 300 is located at an edge of the scrolling area 310 arranged in a portion of a display screen according to another exemplary embodiment.

As described above, when the user moves a pointing position to the edge of the scrolling area 310 arranged in a portion of the display screen by using the control device 200 to reach an end of a scrolling list, the display apparatus 100 outputs scrolling items by deforming the shape the of scrolling items. That is, the display apparatus 100 deforms the scrolling items displayed in the scrolling area 310 to be different from the original forms thereof, and outputs the same. Referring to FIG. 1E, items displayed in the scrolling area 310 arranged in the screen of the display 115 have a lower height and a broader width than the scrolling items illustrated in FIG. 1D. As a width of each item is increased, nine scrolling items, the scrolling items 311 to 319, are displayed, whereas eleven scrolling items, the scrolling items 311 to 321, are displayed in the scrolling area 310 in FIG. 1D. Also, when deforming the shape of scrolling items, only a height thereof may be modified, or only a width thereof may be modified.

When the user intends to further scroll from the end of the scrolling list, the user may output the scrolling items by deforming the shape of the scrolling items so that the user may spontaneously recognize that the end of the scrolling list is reached.

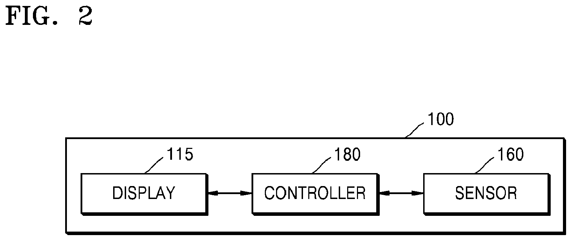

FIG. 2 is a block diagram of the display apparatus 100 according to an exemplary embodiment.

Referring to FIG. 2, the display apparatus 100 includes the display 115, a controller 180, and a sensor 160.

According to an exemplary embodiment, the display 115 outputs a cursor according to an input of the control device 200 according to control of the controller 180.

According to an exemplary embodiment, the display 115 deforms the shape of the cursor 300 based on a scrolling distance of the control device 200, in response to the cursor 300 contacting an edge of a screen of the display 115 according to control of the controller 180.

According to an exemplary embodiment, the display 115 provides on the screen a scrolling area in which a plurality of scrolling items is arranged.

According to an exemplary embodiment, the display 115 outputs the scrolling items by deforming the shape of the scrolling items displayed in the scrolling area, in response to a pointing position of the control device 200 reaching an end of a scrolling list.

According to an exemplary embodiment, the sensor 160 may sense a signal corresponding to a pointing position of the control device 200 according to control of the controller 180.

The controller 180 may receive a signal corresponding to a pointing position of the control device 200 via the sensor 160, control the display 115 to determine a shape and a position of the cursor 300 based on the signal corresponding to the pointing position, and display the cursor 300.

The controller 180 may receive a signal corresponding to a pointing position of the control device 200 via the sensor 160 and control the display 115 to output a scrolling item by deforming a shape of the scrolling item based on the signal corresponding to the pointing position.

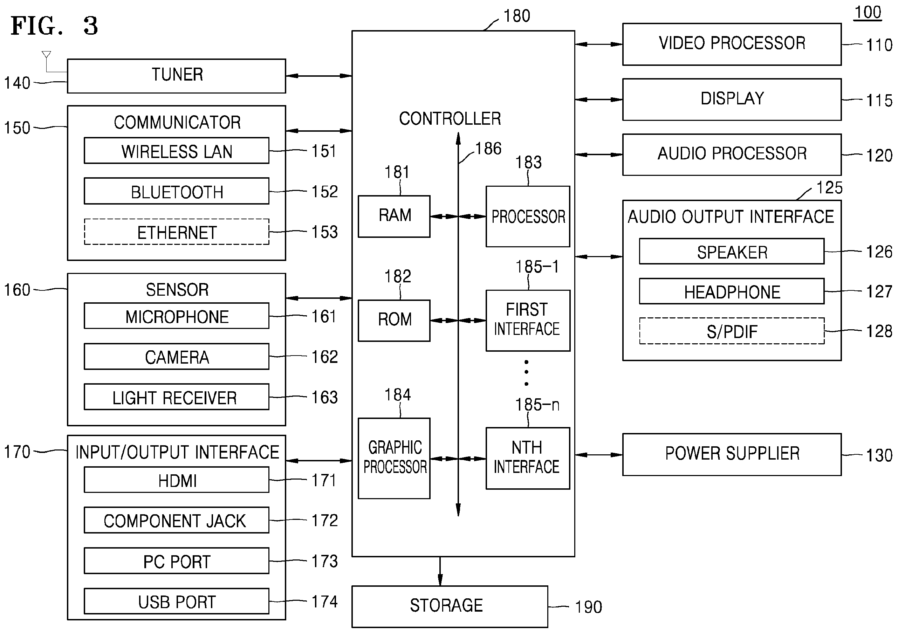

FIG. 3 is a block diagram of a detailed structure of the display apparatus 100 according to an exemplary embodiment.

Referring to FIG. 3, the display apparatus 100 includes a video processor 110, the display 115, an audio processor 120, an audio output interface 125, a power supplier 130, a tuner 140, a communicator 150, the sensor 160, an input/output interface170, the controller 180, and a storage 190.

The video processor 110 processes video data that is received by the display apparatus 100. The video processor 110 may perform various image processing operations, such as decoding, scaling, noise filtering, frame rate transformation, and resolution transformation, on video data.

According to an exemplary embodiment, when the display 115 is provided with a multi-window screen image including a plurality of windows, and videos corresponding to pieces of content are respectively output to the plurality of windows, the video processor 110 may process the videos corresponding to the pieces of content by using a plurality of video processing modules.

The display 115 displays video included in a broadcasting signal received via the tuner 140 on the screen thereof, according to control of the controller 180. The display 115 may also display content (for example, a video) that is input via the communicator 150 or the input/output interface170. The display 115 may output an image stored in the storage 190 according to control of the controller 180. The display 115 may also display a voice user interface (UI) (e.g., including a voice command word guide) for performing a voice recognition task corresponding to voice recognition, or a motion UI (e.g., including a user motion guide for motion recognition) for performing a motion recognition task corresponding to motion recognition.

The display 115 may display a cursor on a screen thereof according to an input of the control device 200 according to control of the controller 180.

The display 115 may deform the shape of the cursor based on a scrolling distance of the control device 200 and output the same in response to the cursor contacting an edge of the screen according to control of the controller 180.

According to an exemplary embodiment, the shape of the cursor may be geometrical.

According to an exemplary embodiment, the shape of the cursor is circular, and the modified shape of the cursor may be an oval shape.

According to an exemplary embodiment, when a scrolling direction of the control device 200 is horizontal, the display 115 may deform the cursor to an oval shape having a long vertical length and output the same according to control of the controller 180, and when a scrolling direction of the control device 200 is vertical, the display 115 may deform the cursor to an oval shape having a long horizontal length and output the same according to control of the controller 180.

Also, according to an exemplary embodiment, the display 115 may output a scrolling area in which a plurality of scrolling items are arranged, on a screen thereof according to control of the controller 180.

Also, according to an exemplary embodiment, the display 115 may deform the shape of a scrolling item based on a scrolling distance and output the scrolling item in response to a cursor reaching an end of a scrolling list according to control of the controller 180.

According to an exemplary embodiment, the display 115 may deform at least one of a height and a width of a scrolling item and output the scrolling item according to control of the controller 180.

According to an exemplary embodiment, the display 115 may deform at least one of a transparency, a color value, a luminosity, and a chroma of a scrolling item and output the scrolling item according to control of the controller 180.

The audio processor 120 processes audio data. The audio processor 120 may perform various processing operations, such as decoding, amplification, or noise filtering, on the audio data. The audio processor 120 may include a plurality of audio processing modules to process pieces of audio corresponding to a plurality of pieces of content.

The audio output interface 125 outputs audio included in a broadcasting signal received via the tuner 140, according to control of the controller 180. The audio output interface 125 may also output audio (for example, a voice or a sound) that is input via the communicator 150 or the input/output interface 170. The audio output interface 125 may also output audio stored in the storage 190 according to control of the controller 180. The audio output interface 125 may include at least one among a speaker 126, a headphone output port 127, and a Sony/Philips Digital Interface (S/PDIF) output port 128. The audio output interface 125 may include a combination of the speaker 126, the headphone output port 127, and the S/PDIF output port 128.

According to an exemplary embodiment, the audio output interface 125 may output a predetermined sound effect in response to a cursor corresponding to an input of the control device 200 and contacting an edge of a screen, according to control of the controller 180.

The power supplier 130 supplies power that is input from an external power source, to the internal components 110-190 of the display apparatus 100, according to control of the controller 180. The power supplier 130 may also supply power that is output by one or more batteries located in the display apparatus 100, to the internal components 110-190 of the display apparatus 100, according to control of the controller 180.

The tuner 140 may tune and select only a frequency of a channel via which the display apparatus 100 is to receive a wired or wireless broadcasting signal from various radio wave components via amplification, mixing, resonance, or the like. The broadcasting signal includes audio, video, and additional information (for example, an electronic program guide (EPG)).

The tuner 140 may receive a broadcasting signal in a frequency band corresponding to a channel number (for example, cable broadcasting No. 506) according to a user input (for example, a control signal received from the control device 200, for example, a channel number input, a channel up-down, and a channel input on an EPG screen image).

The tuner 140 may receive a broadcasting signal from various sources, such as terrestrial broadcasting, cable broadcasting, satellite broadcasting, and Internet broadcasting. The tuner 140 may also receive a broadcasting signal from a source such as analog broadcasting or digital broadcasting. The broadcasting signal received via the tuner 140 is decoded (for example, audio decoding, video decoding, or additional information decoding) and is thus divided into audio, video, and/or additional information. The audio, the video, and/or the additional information may be stored in the storage 190 according to control of the controller 180.

The display apparatus 100 may include a single tuner 140 or a plurality of tuners 140. According to an exemplary embodiment, when a plurality of tuners 140 are included, the plurality of tuners 140 may output a plurality of broadcasting signals to the plurality of windows included in the multi-window screen image provided to the display 115.

The tuner 140 may be integrated with the display apparatus 100, or implemented as a separate apparatus (for example, a tuner that is connected to a set-top box and the input/output interface170) having a tuner that is electrically connected to the display apparatus 100.

The communicator 150 may connect the display apparatus 100 to an external apparatus (for example, an audio apparatus) according to control of the controller 180. The controller 180 may transmit/receive content to/from the external apparatus connected via the communicator 150, download an application from the external apparatus, or perform web-browsing. The communicator 150 may include at least one among a wireless local area network (LAN) interface 151, a Bluetooth interface 152, or a wired Ethernet interface 153 in correspondence to a performance and a structure of the display apparatus 100. The communicator 150 may include a combination of the wireless LAN interface 151, the Bluetooth interface 152, and the wired Ethernet interface 153. The communicator 150 may receive a control signal of the control device 200 according to control of the controller 180. The control signal may be implemented as a Bluetooth type, a radio frequency (RF) signal type, or a Wi-Fi type signal.

The communicator 150 may further include short-range communication (for example, near field communication (NFC), or Bluetooth low energy (BLE)), instead of the Bluetooth interface 152.

The sensor 160 senses a voice of a user, an image of the user, or an interaction with the user.

A microphone 161 receives a voice of the user. The microphone 161 may transform the received voice into an electrical signal and output the electrical signal to the controller 180. The user voice may include, for example, a voice corresponding to a menu or function of the display apparatus 100. A recognition range of the microphone 161 may be recommended to be within 4m from the microphone 161 to a location of the user, and may vary in correspondence to the magnitude of the voice of the user and a surrounding environment (for example, a speaker sound or ambient noise).

The microphone 161 may be integrated with or separate from the display apparatus 100. The separated microphone 161 may be electrically connected to the display apparatus 100 via the communicator 150 or the input/output interface170.

The microphone 161 may be excluded according to the performance and structure of the display apparatus 100.

A camera 162 receives an image (for example, consecutive frames) corresponding to a motion of the user including a gesture within a recognition range of the camera 162. For example, the recognition range of the camera 162 may be a distance within 0.1 to 5 m from the camera 162 to the user. The motion of the user may include a part of the body of the user or a motion or the like of the part of the user, such as the face, a facial expression, the hand, the fist, and a finder of the user. The camera 162 may convert a received image into an electrical signal according to control of the controller 180 and output the electrical signal to the controller 180.

The controller 180 may select a menu that is displayed on the display apparatus 100 by using a result of the recognition of the received motion, or perform control corresponding to the result of the motion recognition. For example, the control may be channel change, volume adjustment, or indicator movement.

The camera 162 may include a lens and an image sensor. The camera 162 may support optical zoom or digital zoom by using a plurality of lenses and image processing. The recognition range of the camera 162 may be variously set according to the angle of the camera 162 and a surrounding environment conditions. When the camera 162 includes a plurality of cameras, a three-dimensional (3D) still image or a 3D motion may be received by the plurality of cameras.

The camera 162 may be integrated with or separate from the display apparatus 100. A separate device including the separate camera 162 may be electrically connected to the display apparatus 100 via the communicator 150 or the input/output interface 170.

The camera 162 may be excluded according to the performance and structure of the display apparatus 100.

A light receiver 163 receives an optical signal (including a control signal) from the control device 200 via a light window of the bezel of the display 115. The light receiver 163 may receive an optical signal corresponding to a user input (for example, touch, depression, a touch gesture, a voice, or a motion) from the control device 200. A control signal may be extracted from the received optical signal according to control of the controller 180.

According to an exemplary embodiment, the light receiver 163 may receive a signal corresponding to a pointing position of the control device 200 and transmit the signal to the controller 180.

The input/output interface 170 receives video (for example, a moving picture), audio (for example, a voice or music), and additional information (for example, an EPG) from outside the display apparatus 100 according to control of the controller 180. The input/output interface 170 may include at least one among a High-Definition Multimedia Interface (HDMI) port 171, a component jack 172, a PC port 173, or a USB port 174. The input/output interface 170 may include a combination of the HDMI port 171, the component jack 172, the PC port 173, and the USB port 174.

The structure and operation of the input/output interface 170 may be variously implemented according to exemplary embodiments.

The controller 180 controls an overall operation of the display apparatus 100 and signal transfer among the internal components 110-190 of the display apparatus 100 and process data. When there is an input of a user or stored preset conditions are satisfied, the controller 180 may execute an operating system (OS) and various applications that are stored in the storage 190.

The controller 180 includes random-access memory (RAM) 181 that stores a signal or data input by an external source of the display apparatus 100 or is used as a memory area for various operations performed by the display apparatus 100, read-only memory (ROM) 182 that stores a control program for controlling the display apparatus 100, and a processor 183.

The processor 183 may include a graphics processing unit for performing video graphics processing. The processor 183 may be implemented by using a System On Chip (SoC) into which a core and a GPU are incorporated. The processor 183 may include a single core processor, a dual-core processor, a triple-core processor, a quad-core processor, or a multi-core processor.

The processor 183 may include a plurality of processors. For example, the processor 183 may be implemented by using a main processor and a sub-processor operating in a sleep mode.

A graphics processor 184 generates a screen image including various objects, such as an icon, an image, and a text, by using an arithmetic unit and a rendering unit. The arithmetic unit calculates attribute values, such as a coordinate value, a shape, a size, a color, and the like, with which each object is to be displayed according to layouts of the screen image, based on the user interaction sensed by the sensor 160. The rendering unit generates screen images of various layouts including objects, based on the attribute values calculated by the arithmetic unit. The screen images generated by the rendering unit are displayed on a display area of the display 115.

According to an exemplary embodiment, the graphic processor 184 may generate a cursor to be displayed on a screen to correspond to an input of the control device 200 according to control of the controller 180.

According to an exemplary embodiment, the graphic processor 184 may deform the shape of the cursor based on a scrolling distance of the control device 200 according to control of the controller 180.

According to an exemplary embodiment, the graphic processor 184 may set the shape of the cursor to a geometrical shape, for example, a circular shape and set a deformed shape of the cursor to an oval shape, according to control of the controller 180.

According to an exemplary embodiment, the graphic processor 184 may generate a scrolling list in which a plurality of scrolling items are arranged, according to control of the controller 180.

According to an exemplary embodiment, the graphic processor 184 may deform the shape of scrolling items in response to the cursor reaching an end of the scrolling list according to control of the controller 180.

First through n-th interfaces 185-1 through 185-n are connected to the above-described components of the display apparatus 100. One of the first through n-th interfaces 185-1 through 185-n may be a network interface that is connected to an external apparatus via a network.

The RAM 181, the ROM 182, the processor 183, the graphics processor 184, and the first through n-th interfaces 185-1 through 185-n are connected to one another via an internal bus 186.

The term "a controller of a display apparatus" used in an exemplary embodiment includes the processor 183, the ROM 182, and the RAM 181.

The controller 180 may receive pointing position information of the control device 200 via at least one of the light receiver 163 receiving output light and a panel key located on a lateral or rear surface of the display apparatus 100.

According to an exemplary embodiment, the controller 180 may control the display 115 to display a cursor on a screen according to an input of the control device 200 and to display the cursor by deforming the shape of the cursor based on a scrolling distance of the control device 200 in response to the cursor contacting the edge of the screen.

According to an exemplary embodiment, the controller 180 may determine a scrolling distance based on a distance difference between an actual pointing position indicated by the control device 200 and a position of the cursor contacting a screen edge.

According to an exemplary embodiment, the controller 180 may control the display 115 to display a cursor by deforming the shape of a cursor, which is originally circular, to an oval shape based on a scrolling distance.

According to an exemplary embodiment, when a scrolling direction of the control device is determined as horizontal, the controller 180 may deform a cursor to a horizontally long oval shape, and when a scrolling direction of the control device is determined as vertical, the controller 180 may control the display 115 such that the cursor is deformed to a horizontally long oval shape.

According to an exemplary embodiment, the controller 180 may determine a scrolling speed based on a scrolling distance.

According to an exemplary embodiment, the controller 180 may control the display 115 to provide a scrolling area displaying at least some of scrolling items of a list, in which a plurality of scrolling items are arranged, and to display the scrolling items by deforming the shape of the scrolling items based on a scrolling distance in response to a cursor corresponding to an input of the control device and reaching an end of the scrolling list.

According to an exemplary embodiment, the controller 180 may deform at least one of a height and a width of a scrolling item.

According to an exemplary embodiment, the controller 180 may modify at least one of a transparency, a color value, a luminosity, and a chroma of a scrolling item.

According to an exemplary embodiment, if a scrolling distance is determined as deviating from a threshold value, the controller 180 may restore the shape of a scrolling item to an original form.

According to an exemplary embodiment, the controller 180 may control the display 115 such that a scrolling area in which a plurality of scrolling items are horizontally arranged is provided to a screen, that horizontal scrolling is provided according to horizontal scrolling of a control device, and that vertical scrolling is provided based on detection of vertical scrolling on one of the plurality of scrolling items by a control device.

According to an exemplary embodiment, the controller 180 may control the display 115 to provide a scrolling area in which a plurality of scrolling items are vertically arranged to a screen, to provide vertical scrolling according to vertical scrolling of a control device, and to provide horizontal scrolling based on detection of horizontal scrolling on one of the plurality of scrolling items by a control device.

The structure and operation of the controller 180 may be variously implemented according to exemplary embodiments.

The storage 190 may store various data, programs, or applications for driving and controlling the display apparatus 100 according to control of the controller 180. The storage 190 may store input/output signals or data corresponding to driving of the video processor 110, the display 115, the audio processor 120, the audio output interface125, the power supplier130, the tuner 140, the communicator 150, the sensor 160, and the input/output interface170. The storage 190 may store a control program for controlling the display apparatus 100 and the controller 180, an application initially provided by a manufacturer or downloaded from outside the display apparatus 100, a graphical user interface (GUI) associated with the application, objects (for example, an image text, an icon, and a button) for providing the GUI, user information, a document, databases, or related pieces of data.

According to an exemplary embodiment, the term "storage" includes the storage 190, the ROM 182, and the RAM 181 of the controller 180, or a memory card (e.g., a micro SD card or a USB memory) mounted in the display apparatus 100. The storage 190 may include a non-volatile memory, a volatile memory, a hard disk drive (HDD), or a solid state drive (SSD).

The storage 190 may include a broadcasting receiving module, a channel control module, a volume control module, a communication control module, a voice recognition module, a motion recognition module, a light receiving module, a display control module, an audio control module, an external input control module, a power control module, a power control module of a wirelessly (for example, Bluetooth) connected external apparatus, a voice database (DB), or a motion DB. These modules and DBs of the storage 190 may be implemented as software to perform a broadcasting reception control function, a channel control function, a volume control function, a communication control function, a voice recognition function, a motion recognition function, a light receiving control function, a display control function, an audio control function, an external input control function, a power control function, or a power control function of the wirelessly (for example, Bluetooth) connected external apparatus. The controller 180 may perform these functions by using the software stored in the storage 190.

According to an exemplary embodiment, the storage 190 may store user setting information received via one of the light receiver 163, a panel key, the microphone 161, and the camera 162. User setting may include user setting regarding a degree of deformation of a cursor and user setting regarding a degree of deformation of a scrolling item.

The storage 190 may store a video or an image corresponding to visual feedback.

The storage 190 may store a sound corresponding to auditory feedback.

The storage 190 may include a presentation module. A presentation module is a module used to configure a display screen. A presentation module includes a multimedia module replaying multimedia content and outputting the same, a user interface (UI), and a UI rendering module performing graphic processing. The multimedia module may include a player module, a camcorder module, a sound processing module, or the like. The multimedia module replays various multimedia contents to generate and reproduce screens and sounds. The UI rendering module may include an image compositor module combining images, a coordinates combination module combining and generating coordinates on a screen on which an image is to be played, a X11 module receiving various events from hardware, a 2D/3D UI tool kit providing a tool for configuring a 2D or 3D UI.

The display apparatus 100 having the display 115 may be electrically connected to an external apparatus (for example, a set-top box) having a tuner. For example, the display apparatus 100 may be implemented by using an analog TV, a digital TV, a 3D TV, a smart TV, an LED TV, an OLED TV, a plasma TV, a monitor, or the like, but the exemplary embodiments are not limited thereto.

The display apparatus 100 may include a sensor (for example, an illuminance sensor or a temperature sensor) for detecting an internal or external state of the display apparatus 100.

At least one of the components (for example, the components 110-190) of the display apparatus 100 of FIG. 3 may be added or deleted according to the performance of the display apparatus 100. The locations of the components (for example, the components 110-190) of the display apparatus 100 of FIG. 3 may be changed according to the performance or structure of the display apparatus 100.

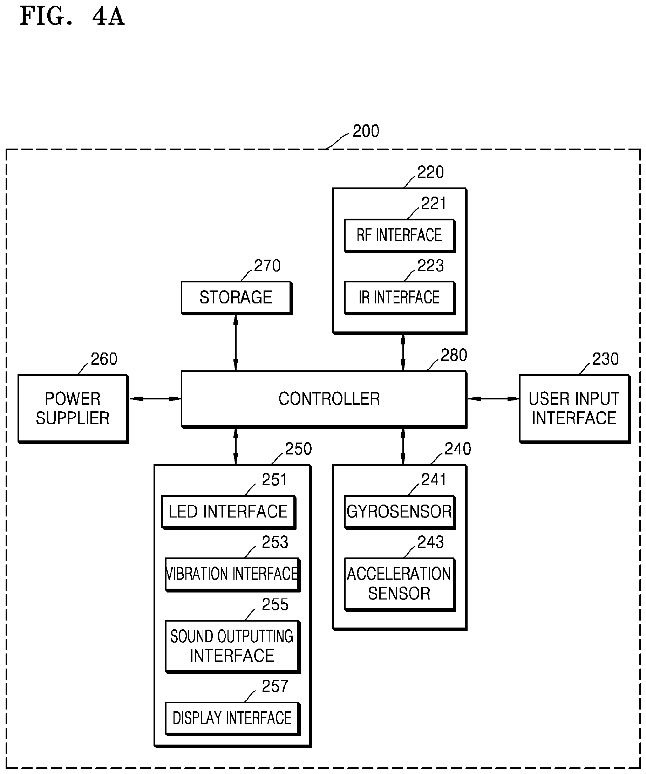

FIG. 4A is a structural block diagram of the control device 200 according to an exemplary embodiment.

Referring to FIG. 4A, the control device 200 includes a wireless communicator 220, a user input interface 230, a sensor 240, an output interface 250, a power supplier 260, a storage 270, and a controller 280.

The wireless communicator 220 may transmit or receive a signal with one of the above-described display apparatuses. The wireless communicator 220 may include an RF interface 221 capable of transmitting or receiving a signal to or from the display apparatus 100 according to RF communication standards. Also, the control device 200 may include an IR interface 223 capable of transmitting and receiving a signal to or from the display apparatus 100 according to IR communication standards.

According to an exemplary embodiment, the control device 200 transmits a signal containing information about, for example, movement of the control device 200 to the display apparatus 100 via the RF interface 221.

Also, the control device 200 may receive a signal transmitted by the display apparatus 100 via the RF interface 221. Also, the control device 200 may transmit a command regarding power on/off, channel change, volume change or the like to the display apparatus 100 via the IR interface 223.

The user input interface 230 may be implemented using a keypad, a button, a touch pad, or a touch screen. A user may input a command about the display apparatus 100 to the control device 200 by manipulating the user input interface 230. When the user input interface 230 includes a hard key button, the user may input a command about the display apparatus 100 to the control device 200 via a push operation of the hard key button. When the user input interface 230 includes a touch screen, the user may touch a soft key of the touch screen to input a command about the display apparatus 100 to the control device 200.

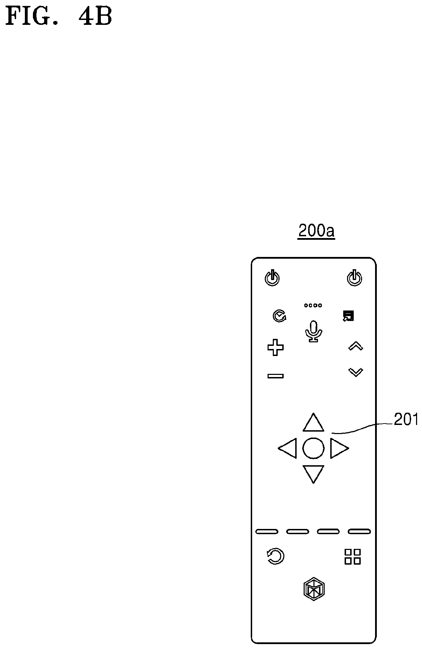

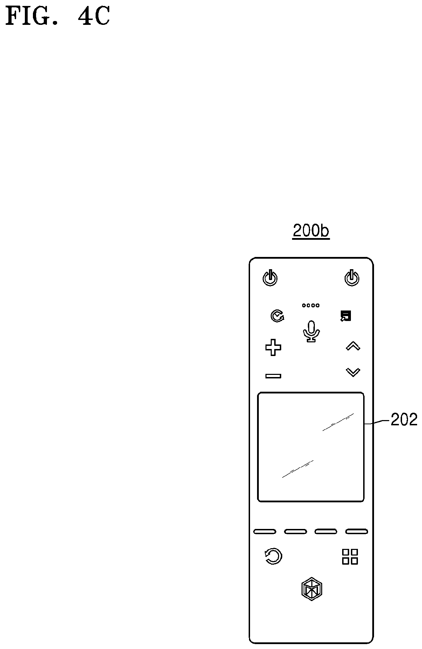

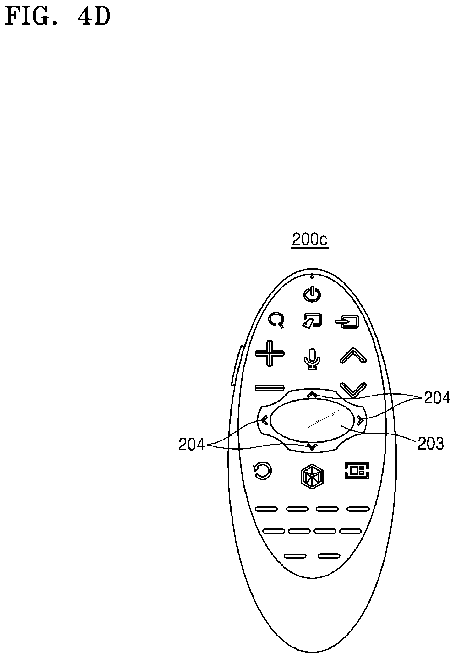

FIGS. 4B, 4C and 4D are diagrams of control devices 200a, 200b, and 200c according to exemplary embodiments.

For example, the user input interface 230 of FIG. 4A may include four-direction buttons or four-direction keys 201 like the control device 200a illustrated in FIG. 4B. The four-direction buttons or four direction-keys 201 may be used to control a window, an area, an application, or an item displayed on the display 115. The four-direction buttons or four direction-keys 201 may be used in indicating upward or downward movement or movement to the left or right. Also, the user input interface 230 may include two-direction keys or two-direction buttons instead of four-direction keys or four-direction buttons.

Also, the user input interface 230 may include various types of input units that a user may manipulate, such as a scroll key or a jog key.

Also, the user input interface 230 of FIG. 4A may include a touch pad 202 like the control device 200b illustrated in FIG. 4C. The user input interface 230 according to an exemplary embodiment may receive a user input indicating, for example, a drag, a touch or a flip via a touch pad of the control device 200. Also, the display apparatus 100 may be controlled according to the type of the received user input (e.g., a direction in which a drag command is input or a time when a touch command is input).

Referring again to FIG. 4A, the sensor 240 may include at least one among a gyro sensor 241 and an acceleration sensor 243. The gyrosensor 241 may sense information about a movement of the control device 200. For example, the gyrosensor 241 may sense information about an operation of the control device 200 with respect to x, y, and z axes. The acceleration sensor 243 may sense information about a movement speed of the control device 200. The sensor 240 may further include a distance measuring sensor to sense a distance with respect to the display apparatus 100.

Referring to FIG. 4D, the control device 200c according to an exemplary embodiment may be implemented using a pointing device including both a four-direction key 204 and a touch pad 203. That is, when the control device 200 is implemented using a pointing device, a function of the display apparatus 100 may be controlled based on a direction in or an angle at which the control device 200 is inclined by using the gyrosensor 241.

Referring again to FIG. 4A, the output interface 250 may output an image or a voice signal corresponding to manipulation by the user input interface 230 or to a signal received by the display apparatus 100. A user may recognize via the output interface 250 whether the user input interface 230 is manipulated or whether the display apparatus 100 is controlled.

For example, the output interface 250 may include at least one among a LED interface 251 that is turned on when the user input interface 230 is manipulated or when a signal is transmitted or received to or from the display apparatus 100 via the wireless communicator 220, a vibration interface 253 generating vibration, a sound outputting interface 255 outputting a sound, and a display 257 outputting an image.

The power supplier 260 supplies power to the control device 200. The power supplier 260 may stop supply power when the control device 200 has not moved for a predetermined period of time, thereby preventing wasting of power. The power supplier 260 may resume power supply when a predetermined key included in the control device 200 is manipulated.

The storage 270 may store various types of programs, application data or the like for controlling or operating the control device 200.

The controller 280 controls an overall control operation of the control device 200. The controller 280 may transmit a signal corresponding to manipulation of a predetermined key of the user input interface 230 or a signal corresponding to movement of the control device 200 sensed by using the sensor 240 to the display apparatus 100 via the wireless communicator 220.

The display apparatus 100 may include a coordinate value calculating unit that calculates coordinate values of a cursor corresponding to an operation of the control device 200.

The coordinate value calculating unit may correct handshake or an error contained in a signal corresponding to a sensed operation of the control device 200 to calculate coordinate values (x, y) of a cursor to be displayed on the display 115.

Also, a transmission signal of the control device 200 sensed by the sensor 240 is transmitted to the controller 180 of the display apparatus 100. The controller 180 may determine information about an operation of the control device 200 and key manipulation from a signal transmitted by the control device 200, and may control the display apparatus 100 based on the information.

Alternatively, the control device 200 may calculate a coordinate value of a cursor corresponding to an operation of the control device 200, and transmit the coordinate value to the display apparatus 100. In this case, the display apparatus 100 may transmit a received coordinate value of a pointer to the controller 180 without correcting a handshake or an error.

According to an exemplary embodiment, a user may control a position of a cursor displayed on a screen of a display by using, for example, a directional key, a touch pad, or a pointing function.

Also, according to an exemplary embodiment, a user may control a degree of deformation of a cursor or a scrolling item displayed on a screen of a display by using a directional key, a touch pad, a pointing function or the like of the control device 200.

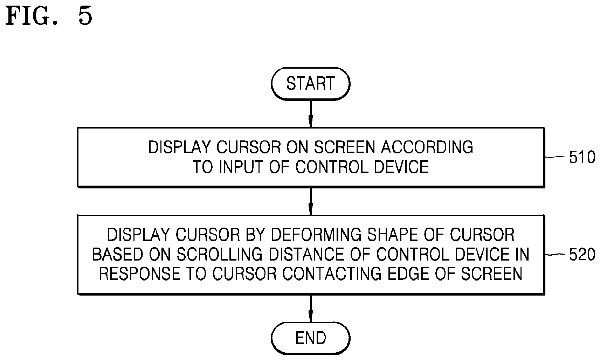

FIG. 5 is a flowchart of a display method performed in a display apparatus, according to an exemplary embodiment.

Referring to FIG. 5, in operation 510, the display apparatus 100 displays a cursor on a screen of a display according to an input of the control device 200.

Referring to FIGS. 3 and 4A, when a user indicates a position on a screen of the display 115 of the display apparatus 100 by using the control device 200, which is implemented by, for example, a pointing device, the sensor 160 of the display apparatus 100 may receive an input signal corresponding to the position indicated by the control device 200, and calculate coordinates on a screen on which the cursor is to be output according to the received input signal. Also, the controller 180 controls the display 115 to display the cursor 300 at the calculated position on the screen.

Referring again to FIG. 5, in operation 520, the display apparatus 100 outputs the cursor by deforming a shape of the cursor based on a scrolling distance of a control device in response to the cursor contacting an edge of a screen.

Referring to FIGS. 3 and 4A, when the user operates the control device 200 such that the control device 200 contacts an edge on a screen of the display 115 of the display apparatus 100 by using the control device 200, which is implemented by, for example, a pointing device, the sensor 160 of the display apparatus 100 receives an input signal corresponding to a position indicated by the control device 200, and the controller 180 calculates a coordinate value on the screen at which a cursor is to be output according to the received input signal. Here, coordinates on the screen at which a cursor is to be output contacts the edge of the screen based on a calculation result, and also, when the position indicated by the control device 200 is further moved beyond the screen so that a scrolling distance is generated, the controller 180 controls the graphic processor 184 to deform the shape of the cursor. Also, the controller 180 controls the display 115 to display the cursor 300 having a modified shape at the calculated position on the screen.

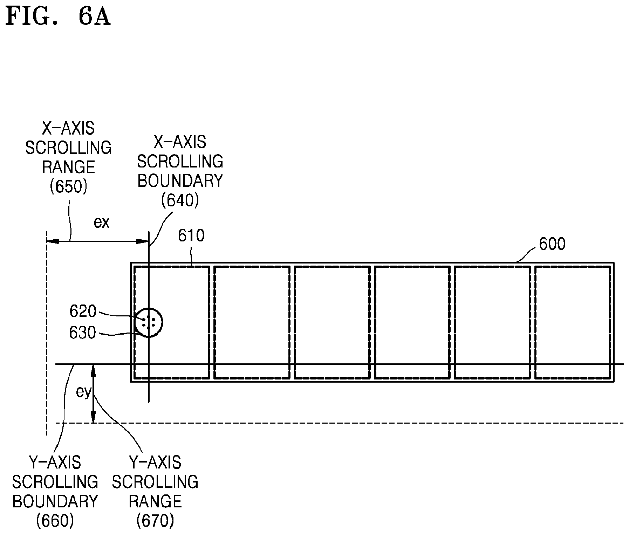

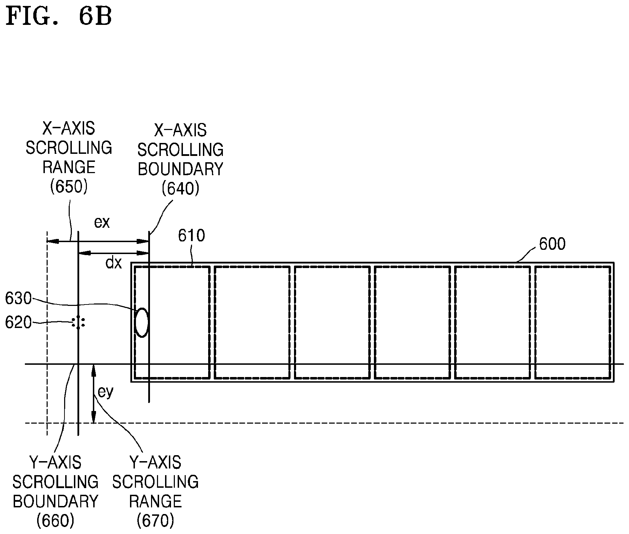

The screen edge includes an upper edge, a lower edge, a left edge, and a right edge of the screen. Hereinafter, a method of deforming the shape of a cursor will be described in detail with reference to FIGS. 6 through 12.

FIGS. 6A and 6B illustrate reference diagrams for explaining deformation of a shape of a cursor 630 when horizontal edge scrolling is performed, according to an exemplary embodiment. In regard to reference diagrams of FIGS. 6A and 6B, description is focused on movement of a cursor in a scrolling area of an exemplary embodiment, in which a scrolling area 600 is arranged in a portion of a screen of a display and an edge of the scrolling area 600 corresponds to an edge of the screen as illustrated in FIGS. 1A through 1E, but the exemplary embodiments are not limited thereto. A shape of a cursor may be deformed not only in response to movement of the cursor in a scrolling area but also to a contact of the cursor with the edge of the entire screen of the display.

FIG. 6A illustrates an output form of a cursor just before edge scrolling in an x-axis direction has started according to an exemplary embodiment.

Referring to FIG. 6A, the display 115 of the display apparatus 100 provides the scrolling area 600 displaying a plurality of scrolling items on a screen. A plurality of scrolling items including a scrolling item 610 are arranged in the scrolling area 600.

Reference numeral 620 denotes a pointing position of the control device 200, that is, a position indicated by the control device 200, which is, for example, a mouse or a remote controller. Reference numeral 630 denotes a cursor displayed on a screen according to the pointing position 620 of the control device 200. The pointing position 620 of the control device 200 is illustrated for reference in regard to description of an exemplary embodiment, and in reality, the display apparatus 100 may not output the pointing position 620 of the control device 200 on a screen but may display and deform the cursor 630 based on information about the pointing position 620. In detail, the display apparatus 100 displays the cursor 630 corresponding to the pointing position 620 of the control device 200 on a display screen, calculates a scrolling distance based on the pointing position 620, deforms the shape of the cursor 630 based on the scrolling distance, and outputs the cursor 630.

According to an exemplary embodiment, as long as the pointing position 620 of the control device 200 is within the scrolling area 600, in detail, as long as the pointing position 620 of the control device 200 is located within an x-axis scrolling boundary 640, the cursor 630 is not deformed. The x-axis scrolling boundary 640 may denote, for example, when the cursor 630 contacts the leftmost edge of the scrolling area 600, a distance from a leftmost edge of the scrolling area 600 to a center of the cursor 630. When the pointing position 620 of the control device 200 has deviated from the x-axis scrolling boundary 640 and starts to move farther out of the scrolling area 600, that is, when the pointing position 620 of the control device 200 contacts the edge of the scrolling area 600 and is moved out of the scrolling area 600 to generate edge scrolling, deformation of the cursor 630 is started.

Referring to FIG. 6A, the pointing position 620 of the control device 200 is on the x-axis scrolling boundary 640 within the scrolling area 600, and thus edge scrolling is not performed yet. Consequently, the pointing position 620 of the control device 200 and the cursor 630 are the same, and the control device 200 outputs the cursor 630 having a circular form that is the original form.

FIG. 6B illustrates an output form of the cursor 630 after edge scrolling is performed according to an exemplary embodiment.

Referring to FIG. 6B, the user moved the pointing position 620 of the control device 200 to a portion further beyond the left end of the scrolling area 600 so that the pointing position 620 of the control device 200 deviates from the scrolling area 600 to be outside the scrolling area 600. A scrolling range 650 is denoted by ex, and a scrolling distance from the current pointing position 620 to the x-axis scrolling boundary 640 is denoted by dx. The pointing position 620 of the control device 200 is on the left from the left end of the scrolling area 600 in an x-axis direction of the scrolling area 600 so that a scrolling distance dx is generated. However, the pointing position 620 is within a range of the scrolling area 600 in a y-axis direction, and thus, a scrolling distance in the y-axis direction is not generated. When deforming the cursor when a scrolling distance is generated as above along one axis, that is, the x-axis, an extension/reduction ratio of the cursor is calculated as follows.

rx = extension/reduction ratio of the cursor along an x-axis

ry = extension/reduction ratio of the cursor along a y-axis

When rx or ry is 1, the cursor is not extended nor reduced, and when rx and ry are each smaller than 1, the cursor is reduced in each of the x-axis direction and the y-axis direction. When rx and ry are each greater than 1, the cursor is extended in each of the x-axis direction and the y-axis direction.

Referring to FIG. 6B, only the scrolling distance dx is generated along the x-axis, and no scrolling distance is generated along the y-axis, and thus, dy=0. Because the cursor has to be extended in the y-axis by an amount by which the cursor is reduced along the x-axis, ry may be calculated based on rx. Thus, an extension/reduction ratio of the cursor may be calculated as follows.

$$rx=1-(dx/ex)$$

$$ry=2-rx$$

The shape of the cursor 630 that is reduced along the x-axis and extended along the y-axis based on rx and ry calculated as above is output on the display as shown in FIG. 6B.

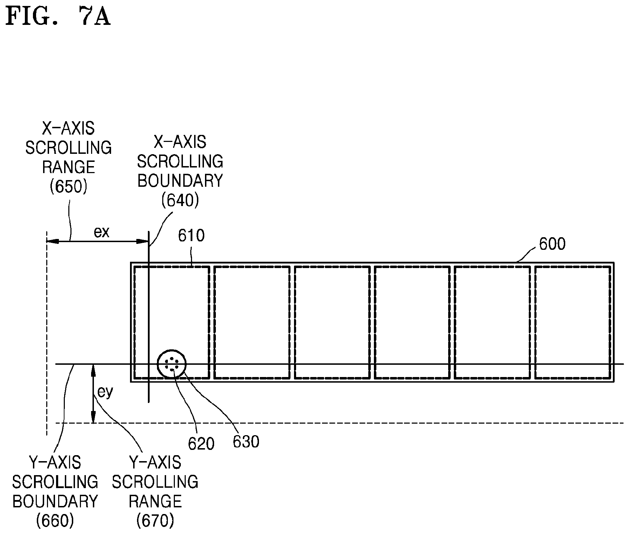

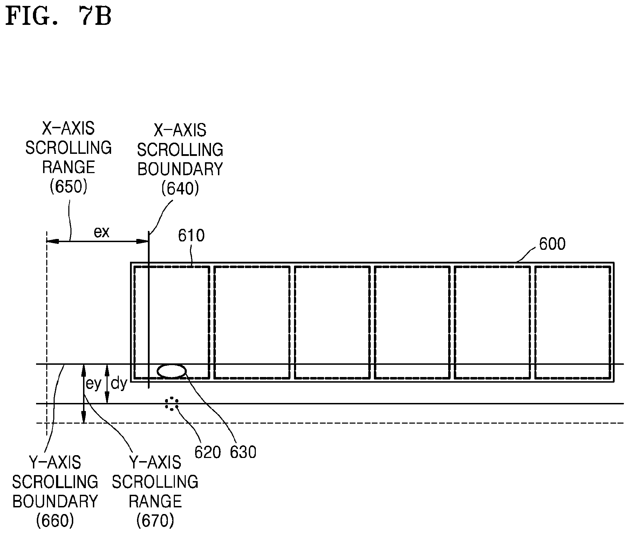

FIGS. 7A and 7B illustrates reference diagrams for explaining deformation of a shape of the cursor 630 when vertical edge scrolling is performed, according to an exemplary embodiment.

FIG. 7A illustrates an output form of the cursor 630 just before edge scrolling in a y-axis direction has started according to an exemplary embodiment.

Referring to FIG. 7A, a plurality of scrolling items including the scrolling item 610 are arranged in the scrolling area 600.

Reference numeral 620 denotes a pointing position of the control device 200. Reference numeral 630 denotes a cursor displayed on a screen according to the pointing position 620 of the control device 200. The pointing position 620 of the control device 200 is illustrated for reference for description of an exemplary embodiment, and in reality, the display apparatus 100 may not output the pointing position 620 of the control device 200 on a screen but may display and deform the cursor 630 based on information about the pointing position 620. In detail, the display apparatus 100 displays the cursor 630 corresponding to the pointing position 620 of the control device 200 on a display screen, calculates a scrolling distance based on the pointing position 620, deforms the shape of the cursor 630 based on the scrolling distance, and outputs the cursor 630.

According to an exemplary embodiment, as long as the pointing position 620 of the control device 200 is within the scrolling area 600, in detail, as long as the pointing position 620 of the control device 200 is located within a y-axis scrolling boundary 660, the cursor 630 is not deformed. The y-axis scrolling boundary 660 may denote a distance from a bottom edge of the scrolling area 600 to a center of the cursor 630 when the cursor 630 reaches the bottom edge of the scrolling area 600. When the pointing position 620 of the control device 200 has deviated from the y-axis scrolling boundary 660 and starts to move further out of the scrolling area 600, that is, when the pointing position 620 of the control device 200 contacts the edge of the scrolling area 600 and the pointing position 620 of the control device 200 is moved out of the scrolling area 600, deformation of the cursor 630 is started.

Referring to FIG. 7A, the pointing position 620 of the control device 200 is on the y-axis scrolling boundary 660 within the scrolling area 600, and thus edge scrolling is not performed yet. Consequently, the pointing position 620 of the control device 200 and the cursor 630 are the same, and the control device 200 outputs the cursor 630 having a circular form which is the original form.

FIG. 7A illustrates an output form of the cursor 630 after edge scrolling is performed according to an exemplary embodiment.

Referring to FIG. 7B, the user moved the pointing position 620 of the control device 200 to a portion further beyond the bottom end of the scrolling area 600 so that the pointing position 620 of the control device 200 deviates from the scrolling area 600 to be outside the scrolling area 600. A scrolling range 670 is denoted by ey, and a scrolling distance from the current pointing position 620 to the y-axis scrolling boundary 660 is denoted by dy. The pointing position 620 of the control device 200 is further below from the bottom end of the scrolling area 600 in a y-axis direction of the scrolling area 600 so that a scrolling distance dy is generated. However, the pointing position 620 is within a range of the scrolling area 600 in an x-axis direction, and thus, a scrolling distance in the x-axis direction is not generated.

Referring to FIG. 7B, only the scrolling distance dy is generated along the y-axis, and no scrolling distance is generated along the y-axis, and thus, dx=0. Because the cursor has to be extended in the x-axis by an amount by which the cursor is reduced in the y-axis, rx may be calculated based on ry. Thus, an extension/reduction ratio rx and ry of the cursor may be calculated as follows.

$$ry=1-(dy/ey)$$

$$rx=2-ry$$

The shape of the cursor 630 that is extended along the x-axis and reduced along the y-axis based on rx and ry calculated as above is output on the display as shown in FIG. 7B.

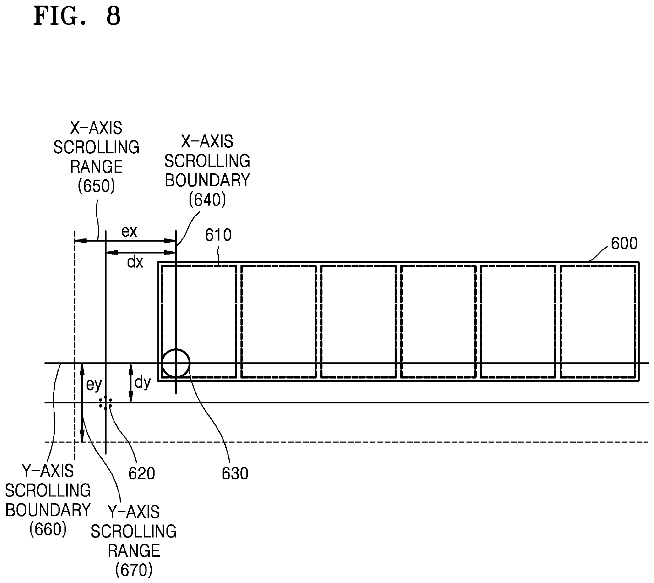

FIG. 8 is a reference diagram for explaining deformation of a shape of the cursor 630 when edge scrolling is performed in a horizontal direction and a vertical direction, according to an exemplary embodiment.

Also when edge scrolling is performed both in a horizontal direction and a vertical direction, that is, also when a scrolling distance is generated both along an x-axis direction and a y-axis direction, when rx and ry are calculated using the calculation method described with reference to FIGS. 6 and 7, a cursor is reduced both along the x-axis and the y-axis, and consequently, the shape of the cursor may be too small, which is visually inappropriate. Thus, in this case, to prevent reduction of the cursor both in the-x axis and the y-axis, another method different from the calculating method of FIGS. 6 and 7 may be used.

Referring to FIG. 8, the pointing position 620 of the control device 200 is outside the scrolling area 600 both along the x-axis and the y-axis, and thus, both dx and dy exist.

dx: a distance from an x-coordinate value of the pointing position 620 of the control device 200 to the x-axis scrolling boundary 640

dy: a distance from a y-coordinate value of the pointing position 620 of the control device 200 to the y-axis scrolling boundary 660

$$rx=1-(dx/ex)$$

$$ry=1-(dy/ey)$$

Also, to prevent reduction of the cursor both in the x-axis direction and the y-axis direction, an offset is calculated as follows and added to each of rx and ry.

$$s=rx+ry$$

$$rx+=(2-s)*rx/s$$

$$ry+=(2-s)*ry/s$$

Thus, as illustrated in FIG. 8, when the x-axis scrolling distance dx and the y-axis scrolling distance dy both exist according to a pointing position, an extension/reduction ratio of the cursor rx and ry used to prevent reduction of the cursor both in the x-axis direction and the y-axis direction may be calculated as below.

$$rx=(rx) + (rx+)$$

$$ry=(ry) + (ry+)$$

The shape of the cursor 630 having an extension/reduction ratio that is set by preventing reduction of the cursor 630 both along the x-axis and the y-axis based on rx and ry calculated as described above, may be output on the display as illustrated in FIG. 8.

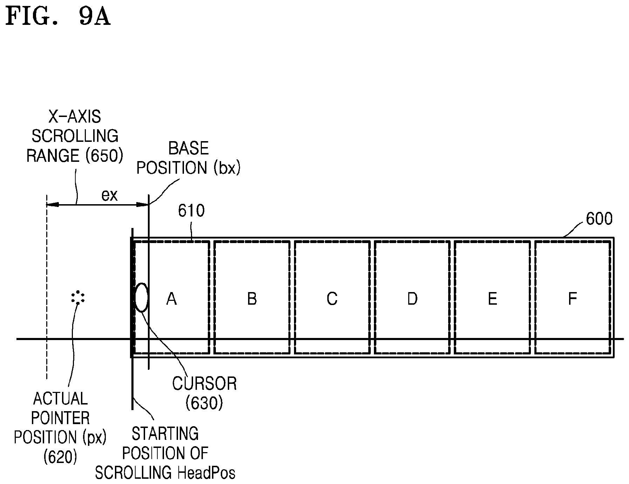

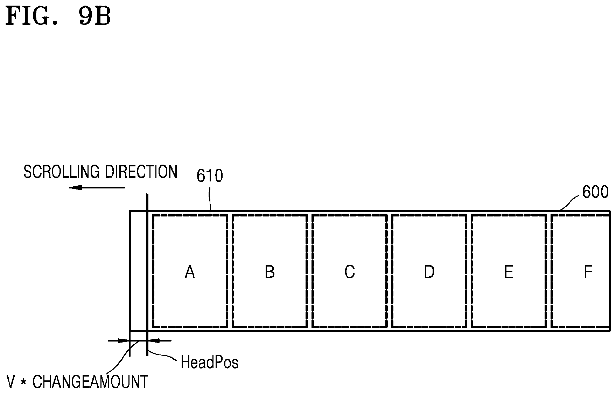

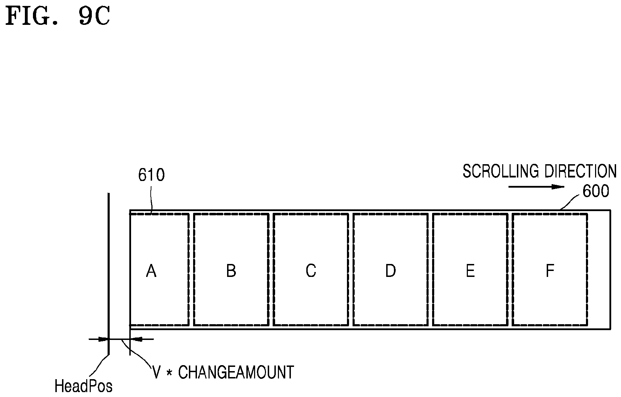

FIGS. 9A, 9B and 9C illustrate reference diagrams for explaining a scrolling speed based on a scrolling distance, according to an exemplary embodiment.

According to an exemplary embodiment, a scrolling speed may be linked to a scrolling distance. That is, when a cursor contacts a screen edge, the shape of the cursor may be squashed proportionally to a distance between an actual position indicated by a pointing position of a control device and a screen when the cursor contacts the screen edge. Also, a scrolling speed may be appropriately varied based on a degree of how much the shape of the cursor is squashed so that a user may feel a force generated when the cursor manipulated by the user has struck the screen edge.

A scrolling speed according to a scrolling distance may be determined as below.

ex: scrolling range

px: x coordinate of a pointing position of a control device

bx= a base position on an x-axis

HeadPos: scrolling starting position of scrolling

An intensity of scrolling may be varied from 0 to 1, and may be calculated as follows.

$$v=abs(px-bx)/ex$$

v=0 indicates that px and bx are identical and thus no scrolling is performed.

A constant of a basic movement distance is CHANGEAMOUNT.

When scrolling is performed from the scrolling area 600 to the left, HeadPos may be calculated as below.

$$HeadPos += v*CHANGEAMOUNT$$

That is, when scrolling is performed to the left, a HeadPos value is obtained by adding v*CHANGEAMOUNT to a previous HeadPos value. In a state illustrated in FIG. 9A, that is, while HeadPos is at a left end of the scrolling area 600, when scrolling is further performed to the left and when a HeadPos variation, that is, HeadPos+ is v*CHANGEAMOUNT, HeadPos is set to a value that is increased from the HeadPos value illustrated in FIG. 9A by v*CHANGEAMOUNT as illustrated in FIG. 9B.

Also, when scrolling is performed to the right, HeadPos may be calculated as below.

$$HeadPos -= v*CHANGEAMOUNT$$

That is, when scrolling is performed to the right, a HeadPos value is obtained by subtracting v*CHANGEAMOUNT from a previous HeadPos value. In the state illustrated in FIG. 9A, that is, while HeadPos is at a left end of the scrolling area 600, when scrolling is further performed to the right and when a HeadPos variation, that is, HeadPos- is v*CHANGEAMOUNT, HeadPos is set to a value that is reduced from the HeadPos value illustrated in FIG. 9A by v*CHANGEAMOUNT as illustrated in FIG. 9C.

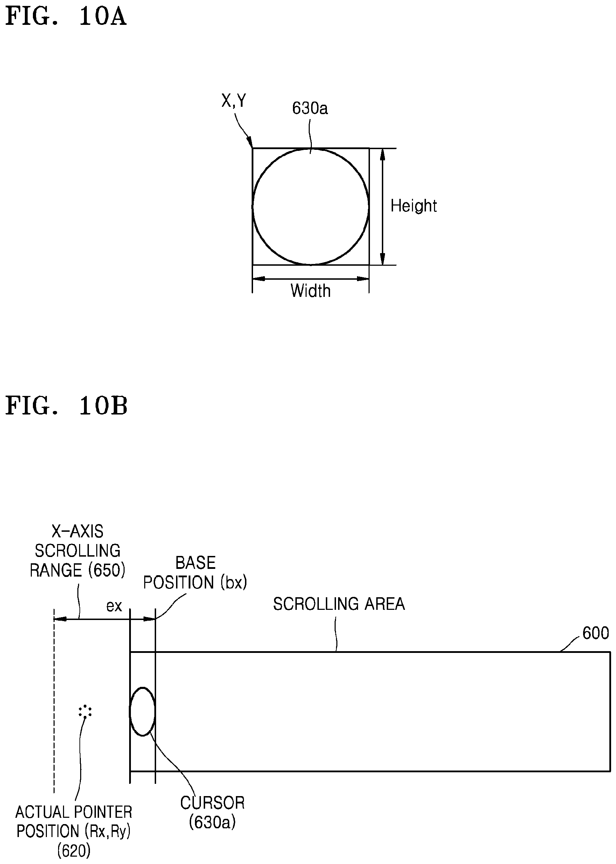

FIGS. 10A and 10B illustrate reference diagrams for explaining a deformation value of a circular cursor 630a according to an exemplary embodiment.

FIG. 10A illustrates an original form of the circular cursor 630a displayed before edge scrolling, according to an exemplary embodiment.

The circular cursor 630a has a height Height and a width Width.

FIG. 10B illustrates a deformed shape of the circular cursor 630a to an oval shape after edge scrolling is generated, according to an exemplary embodiment.

The pointing position 620 of the control device 200 is outside a scrolling area beyond a left end of the scrolling area so that edge scrolling is generated to deform the circular cursor 630a to an oval shape.

As described with reference to FIGS. 6A through 8, a deformation ratio of a cursor, that is, extension and reduction ratios of a cursor, rx and ry, may be calculated as below.

```
if (dx==0 && dy==0) {rx = ry = 1;}
else if (dx==0) {ry=1-(dy/ey); rx=2-ry;}
else if (dy==0) {rx=1-(dx/ex); ry=2-rx;}
else {rx=1-(dx/ex); ry=1-(dy/ey);
s=rx+ry;
rx+=(2-s)*rx/s; ry+=(2-s)*ry/s;
}
```

A width, height and position of a cursor having a radius CURSOR_RADIUS may be calculated as below based on the calculated rx and ry.

Width of a cursor: Width=rx*CURSOR_RADIUS*2

Height of a cursor: Height=ry*CURSOR_RADIUS*2

X coordinate of a cursor: X=l (leftmost boundary of scrolling area)

Y coordinate of a cursor: Y=py-Height/2 (py: y coordinate of actual pointing position)

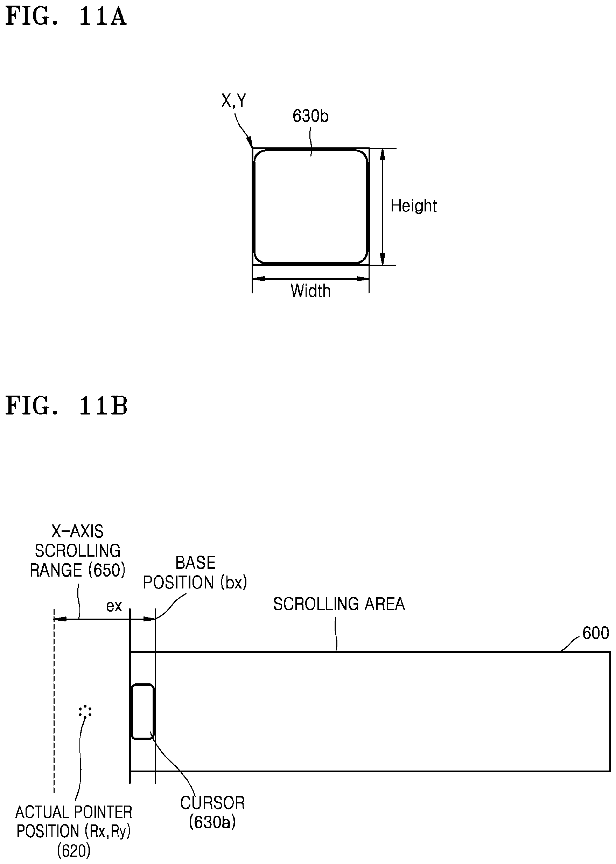

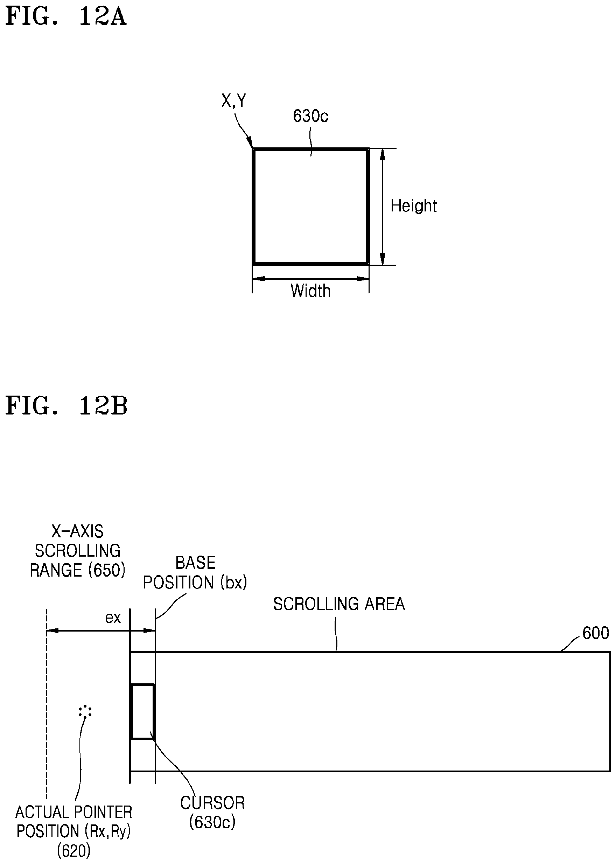

A cursor having a circular shape is illustrated in FIGS. 10A and 10B, but the above calculation method may also be applied to cursors having a square shape with rounded corners or a simple square shape as in FIGS. 11 and 12 below.

FIGS. 11A and 11B illustrate reference diagrams for explaining a deformation value of a square cursor 630b having rounded corners, according to an exemplary embodiment.

A width, height, and position of the cursor 630b having a square shape having rounded corners as illustrated in FIG. 11A may also be calculated as in an exemplary embodiment of FIGS. 10A and 10B. Here, when calculating a width and a height of the cursor 630b, Width/2 or Height/2 may be used instead of CURSOR_RADIUS.

FIG. 11B illustrates the cursor 630b of a square shape having rounded corners, with a greater height and a smaller width than the square shape of the cursor 630b illustrated in FIG. 11A.

FIGS. 12A and 12B illustrate reference diagrams for explaining a deformation value of a square cursor 630c according to an exemplary embodiment.

A width, height, and position of the cursor 630c of a square shape as illustrated in FIG. 12A may also be calculated as in an exemplary embodiment of FIGS. 10A and 10B. Here, when calculating a width and a height of the cursor 630c, Width/2 or Height/2 may be used instead of CURSOR_RADIUS.

FIG. 12B illustrates the cursor 630c having a square shape with a greater height and a smaller width than the square shape of the cursor 630c illustrated in FIG. 12A.

While the cursors having a circular shape, a square shape having rounded corners, and a square shape as described above, a cursor may have any shape. Also, if a cursor has a shape having a height and a width, for example, a rectangular or diamond shape, deformation of the cursor may be calculated according to a calculation method disclosed in the present specification.

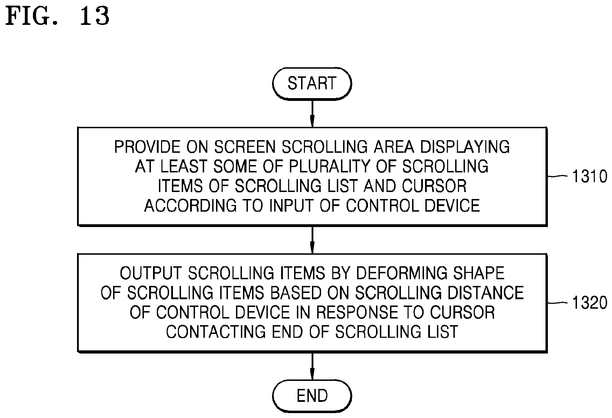

Hereinafter, exemplary embodiments will be described with reference to FIGS. 13 through 16B, in which scrolling items are deformed. When the end of a scrolling list is reached according to a pointing position of a control device manipulated by a user according to an exemplary embodiment, scrolling items may be deformed to provide a user with a user interface whereby the user may spontaneously sense that the end of the scrolling list is reached.

FIG. 13 is a flowchart of a display method performed in a display apparatus, useful for understanding the present invention.

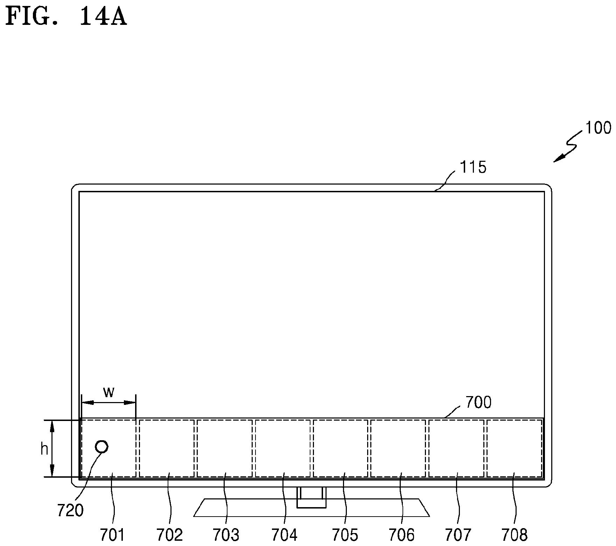

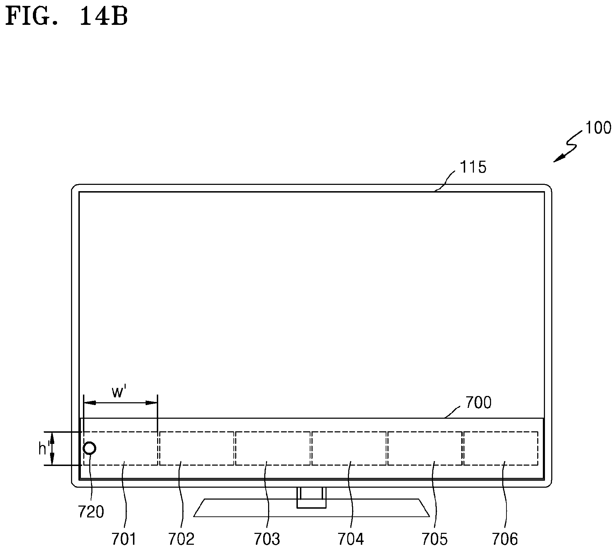

FIGS. 14A and 14B illustrate reference diagrams for explaining outputting scrolling items by deforming shapes of the scrolling items based on a scrolling distance, useful for understanding the present invention.

Referring to FIG. 13, in operation 1310, the display apparatus 100 provides on a screen a scrolling area displaying at least some of a plurality of scrolling items of a scrolling list are displayed, and a cursor according to an input of the control device 200.

Referring to FIG. 14A, the display apparatus 100 provides a scrolling area 700 in a lower end of the display 115 of the display apparatus 100. A scrolling list is displayed in the scrolling area 700, and a plurality of scrolling items 701 through 708 are arranged in the scrolling list. The scrolling items 701 through 708 are displayed in the scrolling area 700 in FIG. 14A. Each scrolling item may have, for example, a square shape having a height h and a width w. Also, the display apparatus 100 provides on a screen of the display 115 a cursor 720 corresponding to a pointing position of the control device 200.

Referring again to FIG. 13, in operation 1320, the display apparatus 100 outputs the scrolling items by deforming a shape of the scrolling items based on a scrolling distance of the control device 200 in response to the cursor contacting the end of the scrolling list.

Referring to FIG. 14B, when the user intends to scroll further from the end of the scrolling list by using the control device 200, the cursor 720 corresponding to the pointing position of the control device 200 reaches a left boundary of the scrolling area 700.

Here, the display apparatus 100 outputs the scrolling items by deforming the scrolling items so that the user may spontaneously sense that the end of the scrolling list is reached. Referring to FIG. 14B, the display apparatus 100 outputs the scrolling items by deforming the height h of each scrolling item to h' and the width w of each scrolling item to w'.

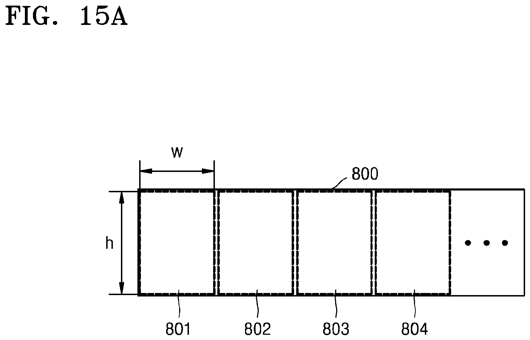

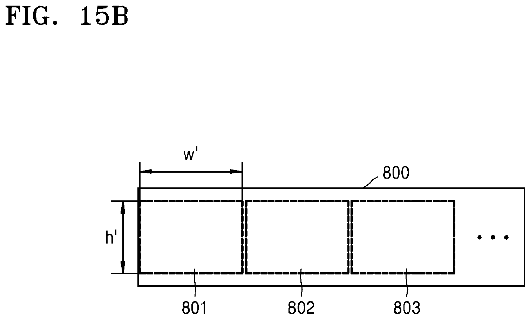

FIGS. 15A and 15B illustrate reference diagrams for explaining deformation of scrolling items when the scrolling items are arranged horizontally, useful for understanding the present invention.

FIG. 15A illustrates a scrolling area 800 in which a plurality of scrolling items 801 through 804 are horizontally arranged. Each scrolling item has a square shape having a height h and a width w.

Referring to FIG. 15B, the display apparatus 100 outputs the scrolling items 801 through 803 by deforming the scrolling items 801 through 803 so that the user may spontaneously sense that the end of a scrolling list is reached. Referring to FIG. 15B, the display apparatus 100 displays the scrolling items 801, 802, and 803 in the scrolling area 800, and outputs the scrolling items 801, 802, and 803 by reducing the height h of each scrolling item to h' and increasing the width w of each scrolling item to w'. Here, a degree of deformation of each scrolling item may be set variously. Only a height of each scrolling item may be deformed, only a width of each scrolling item may be deformed, or both a height and a width of each scrolling item may be deformed. Also, according to an exemplary embodiment, a height may be reduced and a width may be increased by an amount equivalent to the reduced height to maintain the same area of the scrolling item as the area before deformation.

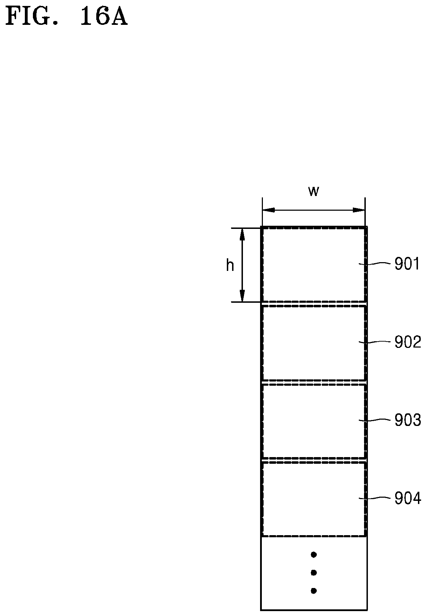

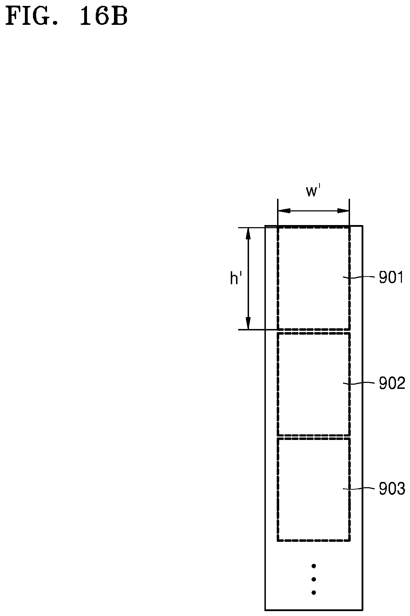

FIGS. 16A and 16B illustrate reference diagrams for explaining deformation of scrolling items when the scrolling items are arranged vertically.

FIG. 16A illustrates a scrolling area 900 in which a plurality of scrolling items 901 through 904 are vertically arranged. Each scrolling item has a square shape having a height h and a width w.

Referring to FIG. 16B, the display apparatus 100 outputs the scrolling items 901 through 903 by deforming the scrolling items 901 through 903 so that the user may spontaneously sense that the end of a scrolling list is reached. Referring to FIG. 16B, the display apparatus 100 displays the scrolling items 901, 902, and 903 in the scrolling area 900, and outputs the scrolling items 901, 902, and 903 by increasing the height h of each scrolling item to h' and reducing the width w of each scrolling item to w'. Here, a degree of deformation of each scrolling item may be set variously. Only a height of each scrolling item may be deformed, only a width of each scrolling item may be deformed, or both a height and a width of each scrolling item may be deformed.

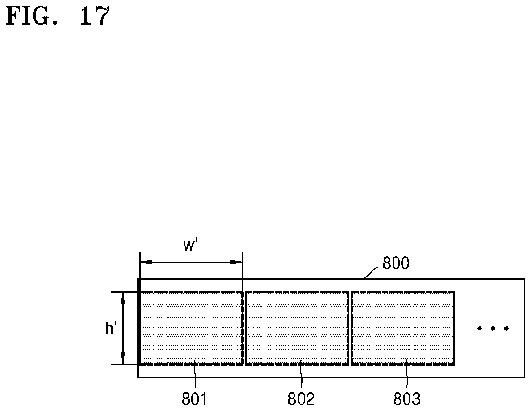

FIG. 17 is a reference diagram for explaining item attributes that are addable to deformation of scrolling items useful for understanding the present invention.

As in FIGS. 15A and 15B and FIGS. 16A and 16B, to allow a user to spontaneously sense that the end of a scrolling list is reached, properties of the scrolling item may be further modified in addition to deformation of a size of the scrolling items.

A transparency of the scrolling item as illustrated in FIG. 15B, having a reduced height and an increased width, may be varied.

A color value of the scrolling item as illustrated in FIG. 15B, having a reduced height and an increased width, may be varied.

A luminosity of the scrolling item as illustrated in FIG. 15B, having a reduced height and an increased width, may be varied.

A chroma of the scrolling item as illustrated in FIG. 15B, having a reduced height and an increased width, may be varied.

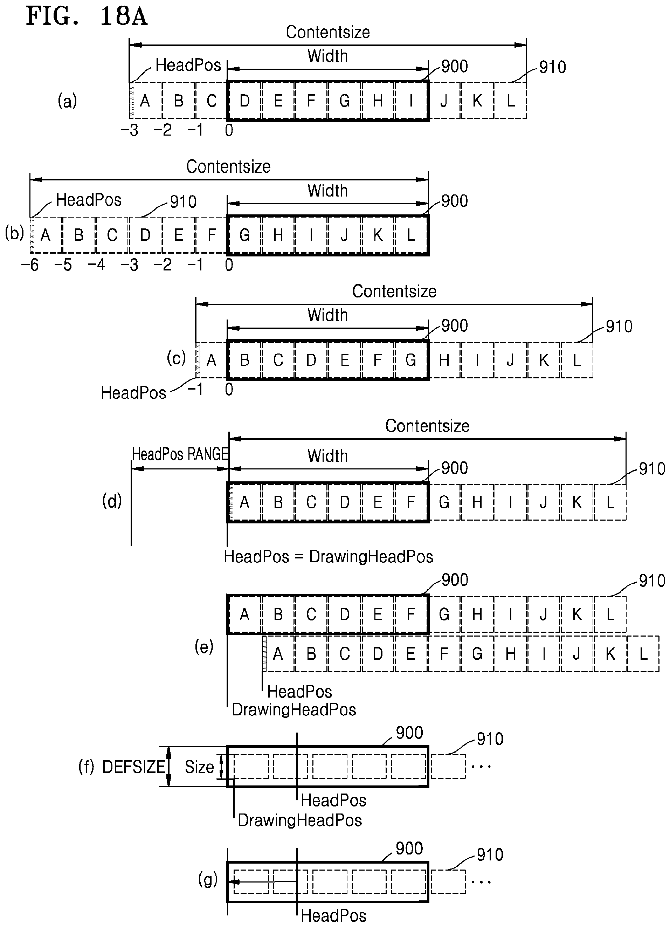

FIG. 18A illustrates reference diagrams (a) through (g) for explaining a method of outputting scrolling items by deforming shapes of the scrolling items based on a scrolling distance, useful for understanding the present invention.

Referring to reference diagram (a) of FIG. 18A, a scrolling area 900 displaying scrolling items and a scrolling list 910 including a plurality of scrolling items are displayed. The scrolling list 910 includes scrolling items A, B, C, D, E, F, G, H, I, K, and L. The scrolling area 900 may display six scrolling items, and items D through I are displayed in the scrolling area 900 in reference diagram (a) of FIG. 18A. The user may scroll from the scrolling area 900 to the left by using a control device so that the scrolling items A, B, and C that are arranged on the left side of the scrolling item D and were not seen are displayed in the scrolling area 900. Also, the user may scroll to the right side by using the control device so that the scrolling items J, K, and L that are arranged on the right side of the scrolling item I and are not seen are displayed in the scrolling area 900. A length of the scrolling list corresponds to a sum of widths of all scrolling items and is denoted by contentsize, and a length of the scrolling area 900 is denoted by Width.

HeadPos denotes a starting point of the scrolling list. When a left boundary portion of the scrolling area 900 is set to 0 as a reference, and a length of one scrolling item is set to 1, HeadPos in reference diagram (a) of FIG. 18A is -3.

Referring to reference diagram (b) of FIG. 18A, by scrolling to the right from the scrolling items as displayed as illustrated in reference diagram (a) of FIG. 18A, by using a control device, the six scrolling items G to L at the right end of the scrolling list are displayed in the scrolling area 900. In reference diagram (b) of FIG. 18A, HeadPos is -6.

Referring to reference diagram (c) of FIG. 18A, by scrolling to the left from the scrolling items as displayed as illustrated in reference diagram (b) of FIG. 18A, by using a control device, the six scrolling items B to G on the left side of the scrolling list are displayed in the scrolling area 900. In reference diagram (c) of FIG. 18A, HeadPos is -1.

Referring to reference diagram (d) of FIG. 18A, by further scrolling to the left from the scrolling items as displayed as illustrated in reference diagram (c) of FIG. 18A, by using a control device, the six scrolling items A through F at the left end the scrolling list are displayed in the scrolling area 900. HeadPos which is a starting position of the scrolling list in reference diagram (d) of FIG. 18A corresponds to the left boundary of the scrolling area 900 and is 0.

HeadPos has a value from -Contentsize + Width to 0.

In detail, when the scrolling items of the scrolling list illustrated in reference diagram (b) of FIG. 18A are scrolled up to the right end and the six scrolling items from the right end are included in the scrolling area 900, HeadPos has a minimum value. In this case, a HeadPos value is -Contentsize + Width. HeadPos has a maximum value in reference diagram (d) of FIG. 18A, that is, when the scrolling items are scrolled up to the left end in the scrolling list so that the six scrolling items from the left end of the scrolling list are included in the scrolling area 900. Here, the maximum value of HeadPos is 0. Accordingly, HeadPos may have a value from <-Contentsize + Width> to <0> in regard to scrolling.

Also, in reference diagram (d) of FIG. 18A, HeadPos is the same as DrawingHeadPos, which is a position where drawing of items starts.

However, in a display state of the scrolling items of reference diagram (d) of FIG. 18A, that is, when the left end of the scrolling list is reached at the left boundary of the scrolling area 900, and the user further scrolls to the left by using a control device, HeadPos becomes greater than 0 as shown in reference diagram (e) of FIG. 18A. Referring to reference diagram (e) of FIG. 18A, an upper portion shows a state of the scrolling list where the left end of the scrolling list reached the left edge of the scrolling area 900. In this state, when the user intends to further scroll to the left by using a control device, as shown in a lower portion of reference diagram (e) of FIG. 18A, a HeadPos value that is a starting position of the scrolling list becomes greater than 0, and as a result, DrawingHeadPos and HeadPos become different.

By determining that HeadPos becomes greater than 0 that is a value for HeadPos, it may be determined that the end of the scrolling list has been reached and that deformation of scrolling items may be started. Likewise, in the display state of the scrolling items as illustrated in reference diagram (b) of FIG. 18A, as the user performs scrolling further to the right end to determine that HeadPos becomes smaller than -Contentsize+Width, which is a range of HeadPos, it may be determined that deformation of the scrolling items may be started as the end of the scrolling list has been reached.

As described above with reference to reference diagram (e) of FIG. 18A, when scrolling is further performed from the end of the scrolling list, a position where drawing a scrolling item at the left end portion of the scrolling area 900 starts, that is, DrawingHeadPos may be adjusted. That is, to allow a user to intuitively recognize that the end of the scrolling list is reached, the position where drawing a scrolling item at the left end portion of the scrolling area 900 starts, that is, DrawingHeadPos, may be located not at the left boundary of the scrolling area 900 but slightly to the right from the left boundary.

A value of DrawingHeadPos may be obtained using the following calculation method.

```
float AutoScrollArea::calcDrawHeadPos() {

if (HeadPos < -Contentsize+Width) {// when HeadPos is smaller than -Contentsize+Width

    const float d = (-Contentsize+ Width - HeadPos);

    const float t = d / Width;


    return

    -contentSize+Width-MOVELIMIT*interp(t); // calculate DrawHeadPos like the adjoining formula

    }

else if (HeadPos > 0) { //when HeadPos is greater than 0

    const float d = HeadPos;

    const float t = d / Width;

    return MOVELIMIT*interp(t);

    } // calculate HeadPos like the adjoining formula

    return HeadPos; // When HeadPos is not smaller than -Contentsize+Width and not greater than 0, DrawHeadPos is the same as HeadPos.

    }

    return HeadPos; // when HeadPos value is not smaller than -Contentsize+Width and not greater than 0, a DrawHeadPos value is the same as HeadPos

    }
```

The above calculation method will be described in detail below.

Reference diagram (f) of FIG. 18A is a reference diagram for explaining a deformation amount of a scrolling item.

Referring to reference diagram (f) of FIG. 18A, a default height of a scrolling item is 'DEFSIZE,' and a height of a deformed scrolling item deformed according to scrolling item deformation is denoted by 'size.' Also, in a default state of the scrolling item, a y-axis position is 'DEFPOS,' and a y-axis position of the deformed scrolling item deformed according to scrolling item deformation is denoted by 'POS.' DEFORMLIMIT refers to a maximum value of an amount by which a scrolling item is deformed.

A height and a position of a deformed scrolling item according to an exemplary embodiment may be calculated, for example, as below.

```
DEFSIZE=100

DEFORMLIMIT=0.8

if (headpos<-contentSize+width) { // when scrolling is performed more to the right from the right

t=(-contentSize+width-HeadPos)/width; // calculate t

}

else if (headPos>0) { // when scrolling is performed more to the left from the left end

        t=HeadPos/width; //calculate t

        }

        size=DEFSIZE*lerp(1,DEFORMLIMIT,interp(t));// calculate size

        pos=DEFPOS+(DEFAULTSIZE-size)/2    // calculate Pos
```

Here, lerp() is a linear interpolation function and is calculated as lerp(a,b,t)=a+t(b-a). lerp() is a function that is used to smoothly change one value to another.

Thus, lerp(1,DEFORMLIMIT,interp(t)) is a function of returning a value at interp(t) when varying a value from 1 to DEFORMLIMIT.

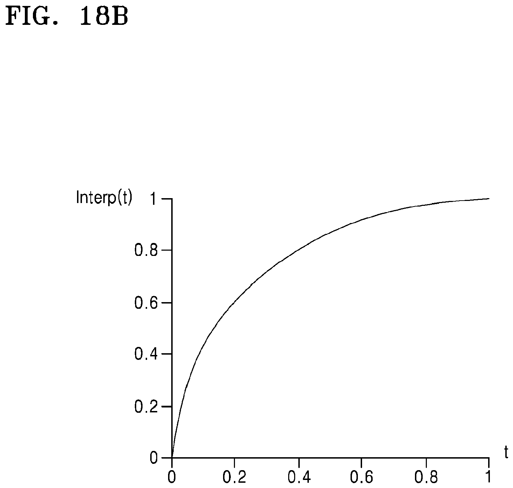

Thus, when varying the size, which is the height of the deformed scrolling item, from 1 to 0.8 (the DEFORMLIMIT value set above) with respect to a default size of 100, the size may be smoothly varied by using lerp(1,DEFORMLIMIT, interp(t)). lerp(1,DEFORMLIMIT,interp(t)) will now be described below with reference to FIG. 18B.

FIG. 18B is a graph illustrating an interpolating curve Interp(t), useful for understanding the present invention.

Interp(t) is an interpolating curve having an inclination decreasing towards 1.

The variable t is proportional to HeadPos. For example, in the state as illustrated in reference diagram (f) of FIG. 18A, while the left side of the scrolling list corresponds to the left boundary of the scrolling area, when scrolling is performed further to the left, HeadPos is moved to the right, and if a scrolling value by which scrolling to the left is performed is small, HeadPos is also reduced, and t that is proportional to HeadPos is also reduced. Referring to FIG. 18B, when t is a relatively small value, Interp(t) has a relatively large inclination variation, and lerp(1,DEFORMLIMIT, interp(t))=1+ interp(t) (DEFORMLIMIT-1), and thus, a value of lerp is relatively abruptly varied.

Also, when a scrolling value by which scrolling to the left is performed is increased in the reference diagram (f) of FIG. 18A, HeadPos is also increased, and t which is proportional to HeadPos is also increased. Referring to FIG. 18B, when t is a relatively great value, Interp(t) has a relatively small inclination variation, and lerp(1,DEFORMLIMIT, interp(t)) = 1+ interp(t) (DEFORMLIMIT-1), and thus, lerp is varied by a relatively gentle angle.

Thus, when HeadPos deviates from a range of HeadPos by a small degree, a variation of a height of a scrolling item 'Size' is large, and the more HeadPos deviates from the range of HeadPos, the more the variation of the height of the scrolling item 'Size' is reduced, and the user may experience an increase in resistance.

Also, referring to reference diagram (f) of FIG. 18A, while the left side of the scrolling list corresponds to the left boundary of the scrolling area 900, when scrolling is performed further to the left, HeadPos is moved to the right, and here, DrawingHeadPos which is an actual starting position for drawing a scrolling item may also be changed. That is, referring to reference diagram (f) of FIG. 18A, DrawingHeadPos does not correspond to the left boundary of the scrolling area 900 and is located slightly to the right from the left boundary of the scrolling area 900. DrawingHeadPos may be calculated as below.

```
if (headPos<-contentSize+width) {// when scrolling is performed further from the right end

t=(-contentSize+width-HeadPos)/width;

return –contentSize+width-MOVELIMIT*interp(t)

}

else if (headPos>0) { // when scrolling is performed further from the left end

t=HeadPos/width;

return MOVELIMIT*interp(t)
```

Here, MOVELIMIT denotes a constant corresponding to a maximum distance which may be moved from the end of the scrolling list, and Interp denotes an interpolating curve having a smaller inclination towards 1 as illustrated in FIG. 18B.

In the above case, for example, when scrolling is performed further from the left end, t is proportional to HeadPos, and Interp(t) is an interpolating curve having a smaller inclination towards 1.

Also, referring to reference diagram (f) of FIG. 18A, while the left side of the scrolling list corresponds to the left boundary of the scrolling area 900, when scrolling is performed further to the left, HeadPos is moved to the right, and when a scrolling value by which the scrolling to the left is performed is reduced, HeadPos is also reduced, and t that is proportional to HeadPos is also reduced. Referring to FIG. 18B, when t is a relatively small value, Interp(t) has a relatively large inclination variation, and accordingly, DrawingHeadPos = MOVELIMIT*interp(t) and which has a large inclination variation.

In the state as illustrated in reference diagram (f) of FIG. 18A, while the left side of the scrolling list corresponds to the left boundary of the scrolling area 900, when scrolling is performed further to the left, HeadPos is moved to the right, and when a scrolling value by which the scrolling to the left is performed is increased, HeadPos is also increased, and t that is proportional to HeadPos is also increased. Referring to FIG. 18B, when t is a relatively great value, Interp(t) has a relatively small inclination variation, and accordingly, DrawingHeadPos = MOVELIMIT*interp(t), which has a small inclination variation.

Thus, when HeadPos deviates from a range of HeadPos by a small degree, a variation of DrawingHeadPos is large, and the more HeadPos deviates from the range of HeadPos, the more the variation of the height of the scrolling item 'Size' is reduced. Accordingly, the user may experience an increase in resistance.

Reference diagram (g) of FIG. 18A is a reference diagram showing restoring of a deformed scrolling item according to an exemplary embodiment to its original form.

Restoring of the deformed scrolling item to its original form may be performed, for example, when a scrolling operation is not performed and HeadPos deviates from a range of HeadPos, that is, when a scrolling operation is released.

Restoring of the deformed scrolling item to its original form may be performed as below.

```
if (Headpos<-contentSize+width) {

// When scrolling is performed further from the right end, animation is performed as below.

value0=HeadPos; value1=-contentSize+width;

startAt=elapsedTime();

startAnimation();

}

else if (HeadPos>0) {

// When scrolling is performed further from the left end, animation is performed as below.

value0=HeadPos; value1=0;

startAt=elapsedTime();

startAnimation();

DURATION; // Returning Animation Duration

t=elapsedTime()-startAt;

v=1;   // If time elapsed has already passed, a basic value is 1.

if (t<DURATION)

v=t/DURATION;

else

stopAnimation();    // End of animation

HeadPos=lerp(value0,value1,interp(v));
```

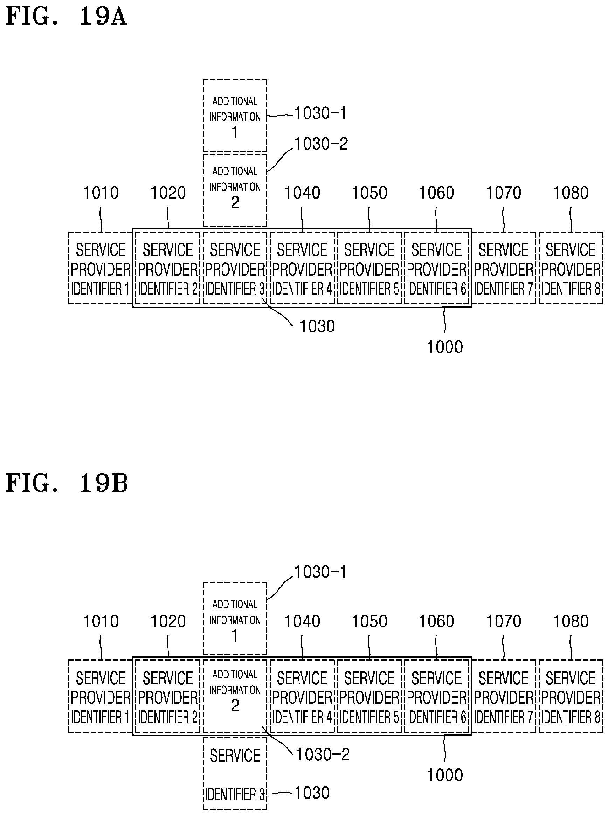

FIGS. 19A and 19B illustrate reference diagrams for explaining a scrolling direction according to an exemplary embodiment.

Referring to FIG. 19A, a horizontal scrolling area 1000 useful for understanding the present invention is illustrated. In the horizontal scrolling area 1000, some scrolling items 1020 through 1060 among scrolling items 1010, 1020, 1030, 1040, 1050, 1060, 1070, and 1080 of a scrolling list are displayed. The scrolling items 1010, 1020, 1030, 1040, 1050, 1060, 1070, and 1080 respectively denote service provider identifiers 1, 2, 3, 4, 5, 6, 7, and 8. A user may scroll the scrolling list in a horizontal direction, that is, in an x-axis direction by using a control device so that some of the scrolling items 1010 to 1080 are displayed in the horizontal scrolling area 1000.

In regard to a horizontal scrolling list as above, vertical scrolling may be added. For example, when the scrolling item 1030 indicating a service provider identifier 3 is selected by using the control device 200, or while a cursor corresponding to the control device 200 is located on the scrolling item 1030, when the user performs vertical scrolling by using the control device 200, vertical scrolling may be generated. Vertical scrolling refers to scrolling performed by the user on the scrolling item 1030 upwardly or downwardly by using the control device 200. A vertical scrolling list corresponding to the service provider identifier 3 includes, as scrolling items, additional information 1 1030-1 and additional information 2 1030-2. In a state of FIG. 19A, when the user performs vertical scrolling with respect to the scrolling item 1030 indicating the service provider identifier 3 by using the control device 200, as illustrated in FIG. 19B, the scrolling item 1030-2 indicating additional information 2 may be displayed in the horizontal scrolling area 1000.

In FIGS. 19A and 19B, the vertical scrolling list with respect to the scrolling item 1030 corresponding to the service provider identifier 3 is illustrated for convenience of description. However, the other scrolling items 1010 through 1080 may also be arranged to have respective vertical scrolling lists.

Additional information corresponding to a service provider identifier may denote a list of contents provided by a service provider.

Additional information corresponding to a service provider identifier may denote a program that is set as a preferred program among programs provided by a service provider.

Additional information corresponding to a service provider identifier may denote information about a program that is currently provided by a service provider or information about a next program to be provided by a service provider after a currently provided program is ended.

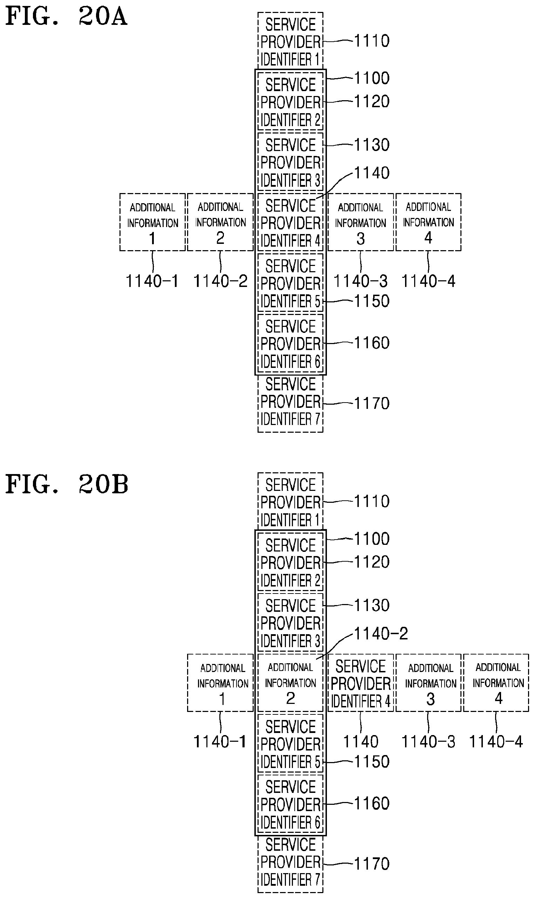

FIGS. 20A and 20B illustrate reference diagrams for explaining a scrolling direction useful for understanding the present invention. Referring to FIG. 20A, a vertical scrolling area 1100 is illustrated. In the vertical scrolling area 1100, some scrolling items 1120 through 1160 among scrolling items 1110, 1120, 1130, 1140, 1150, 1160, and 1170 of a scrolling list are displayed in the vertical scrolling area 1100. The scrolling items 1110, 1120, 1130, 1140, 1150, 1160, and 1170 respectively denote service provider identifiers 1, 2, 3, 4, 5, 6, and 7. Thus, the user may display the scrolling items 1110 to 1170 by vertically scrolling the scrolling list by using the control device 200.

In regard to a vertical scrolling list as above, horizontal scrolling may be added. For example, when the scrolling item 1140 indicating a service provider identifier 4 is selected by using the control device 200, or while a cursor corresponding to the control device 200 is located on the scrolling item 1140, when the user performs horizontal scrolling by using the control device 200, horizontal scrolling may be generated. Horizontal scrolling refers to scrolling performed by the user on the scrolling item 1140 to the left or the right by using the control device 200. A horizontal scrolling list corresponding to the service provider identifier 4 includes, as scrolling items, additional information 1 1140-1, additional information 2 1140-2, additional information 3 1140-3, and additional information 4 1140-4. In FIG. 20A, when the user performs horizontal scrolling with respect to the scrolling item 1140 indicating the service provider identifier 4 by using the control device 200, as illustrated in FIG. 20B, the scrolling item 1140-2 indicating additional information 2 may be displayed in the vertical scrolling area 1100.

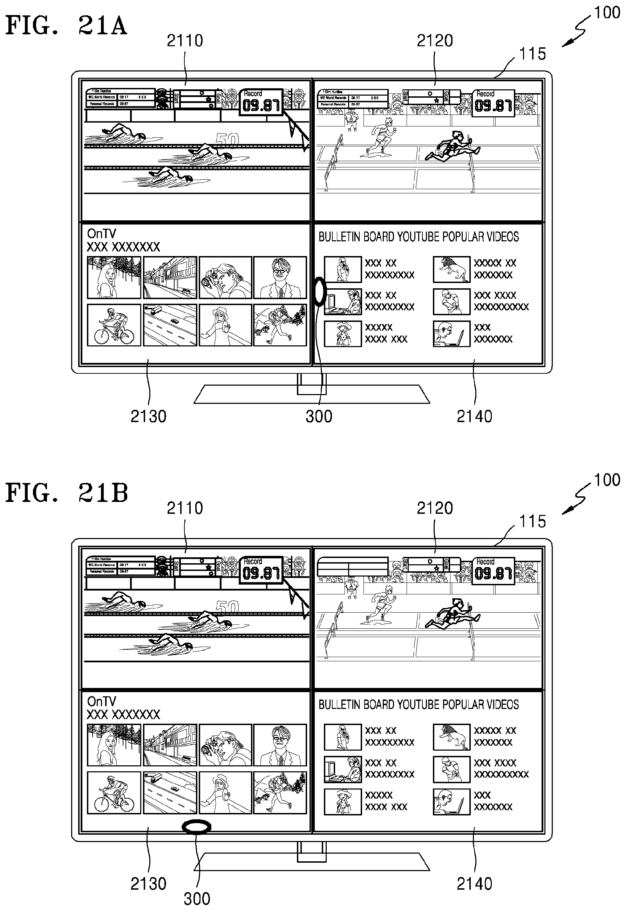

FIGS. 21A and 21B illustrate reference diagrams for explaining an example in which deformation of a cursor based on a scrolling distance is applied to a multi-window screen according to an exemplary embodiment.

A multi-window screen refers to a screen including multiple windows, and may be used to simultaneously replay a plurality of pieces of contents by dividing one display screen into multiple windows.

Referring to FIG. 21A, a multi-window screen is provided on the display 115 of the display apparatus 100. The multi-window screen illustrated in FIG. 21A includes a first window 2110, a second window 2120, a third window 2140, and a fourth window 2140. Different contents may be provided on the respective windows of the multi-window screen. For example, broadcasting content received from a tuner, content received via the Internet, and content received from an external input device or an internal storage device may be replayed through respective windows.

In a multi-window screen, the user may separately control respective windows by using the control device 200. Thus, the shape of the cursor may be deformed in response to the cursor contacting an edge of each window of the multi-window screen provided to the display 115 according to an exemplary embodiment.

For example, as illustrated in FIG. 21A, when the cursor 300 contacts an edge of the fourth window 2140 displaying thumbnail information of a YouTube video and then scrolling is further performed, the shape of the cursor 300 may be deformed. Although the left edge of the fourth window 2140 illustrated in FIG. 21A is not an edge of the screen of the display 115, in an exemplary embodiment illustrated in FIG. 21A, respective windows of the multi-window screen are each used as one individual screen, and thus, the cursor 300 may be applied by regarding the edge of the fourth window 2140, which the cursor 300 is contacting, also as an edge of the screen in FIG. 21A.

Likewise, as illustrated in FIG. 21B, also when scrolling is further performed after the cursor 300 has contacted an edge of the third window 2130 displaying channel information, the shape of the cursor 300 may also be deformed.

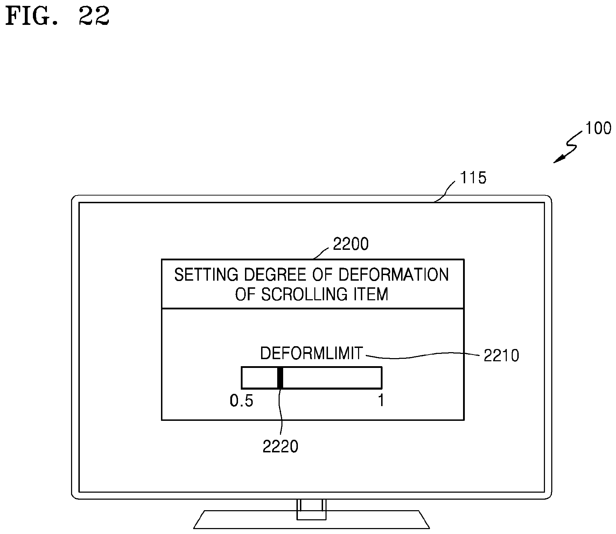

FIG. 22 illustrates a user interface 2200 for setting a degree of deformation of scrolling items useful for understanding the present invention.

In Figures 22 in which a size of a scrolling item is changed, a user interface allowing a user to set a degree of deformation of the scrolling item may be provided. Referring to FIG. 22, the user interface 2200 is provided on the display 115 of the display apparatus 100.

A user may set a degree of deformation of a scrolling item by controlling a DEFORMLIMIT item 2210 on the user interface 2200 for setting a degree of deformation of a scrolling item. Referring to FIG. 22, the user may set a DEFORMLIMIT value by locating a bar 2220 at a position, for example, between 0.5 to 1.0 by using the control device 200 in the DEFORMLIMIT item 2210. DEFORMLIMIT is described above with reference to reference diagram (f) of FIG. 18, and the user may minimize a height of a scrolling item by increasing the degree of deformation of the scrolling item by setting DEFORMLIMIT to a minimum value or may set a small degree of deformation of a scrolling item by setting DEFORMLIMIT to a maximum value so that a height of the deformed scrolling item is not different from a height of an original scrolling item, that is, such that no deformation is generated.

According to one or more exemplary embodiments, a user may experience spontaneously and intuitively that an end of a list is reached when a shape of a cursor is deformed when performing edge scrolling.

In addition, the exemplary embodiments may also be implemented through computer-readable code and/or instructions on a medium, e.g., a computer-readable medium, to control at least one processing element to implement any above-described exemplary embodiments. The medium may correspond to any medium or media which may serve as a storage and/or perform transmission of the computer-readable code.

The computer-readable code may be recorded and/or transferred on a medium in a variety of ways, and examples of the medium include recording media, such as magnetic storage media (e.g., ROM, floppy disks, hard disks, etc.) and optical recording media (e.g., compact disc read only memories (CD-ROMs) or digital versatile discs (DVDs)), and transmission media such as Internet transmission media. Thus, the medium may have a structure suitable for storing or carrying a signal or information, such as a device carrying a bitstream according to one or more exemplary embodiments. The medium may also be on a distributed network, so that the computer-readable code is stored and/or transferred on the medium and executed in a distributed fashion. Furthermore, the processing element may include a processor or a computer processor, and the processing element may be distributed and/or included in a single device.

The foregoing exemplary embodiments are examples and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

to FIG. 14B, the display apparatus 100 outputs the scrolling items by deforming the height h of each scrolling item to h' and the width w of each scrolling item to w'.

FIGS. 15A and 15B illustrate reference diagrams for explaining deformation of scrolling items when the scrolling items are arranged horizontally, according to an exemplary embodiment.

FIG. 15A illustrates a scrolling area 800 in which a plurality of scrolling items 801 through 804 are horizontally arranged. Each scrolling item has a square shape having a height h and a width w.

Referring to FIG. 15B, the display apparatus 100 outputs the scrolling items 801 through 803 by deforming the scrolling items 801 through 803 so that the user may spontaneously sense that the end of a scrolling list is reached. Referring to FIG. 15B, the display apparatus 100 displays the scrolling items 801, 802, and 803 in the scrolling area 800, and outputs the scrolling items 801, 802, and 803 by reducing the height h of each scrolling item to h' and increasing the width w of each scrolling item to w'. Here, a degree of deformation of each scrolling item may be set variously. Only a height of each scrolling item may be deformed, only a width of each scrolling item may be deformed, or both a height and a width of each scrolling item may be deformed. Also, according to an exemplary embodiment, a height may be reduced and a width may be increased by an amount equivalent to the reduced height to maintain the same area of the scrolling item as the area before deformation.

FIGS. 16A and 16B illustrate reference diagrams for explaining deformation of scrolling items when the scrolling items are arranged vertically.

FIG. 16A illustrates a scrolling area 900 in which a plurality of scrolling items 901 through 904 are vertically arranged. Each scrolling item has a square shape having a height h and a width w.

Referring to FIG. 16B, the display apparatus 100 outputs the scrolling items 901 through 903 by deforming the scrolling items 901 through 903 so that the user may spontaneously sense that the end of a scrolling list is reached. Referring to FIG. 16B, the display apparatus 100 displays the scrolling items 901, 902, and 903 in the scrolling area 900, and outputs the scrolling items 901, 902, and 903 by increasing the height h of each scrolling item to h' and reducing the width w of each scrolling item to w'. Here, a degree of deformation of each scrolling item may be set variously. Only a height of each scrolling item may be deformed, only a width of each scrolling item may be deformed, or both a height and a width of each scrolling item may be deformed.

FIG. 17 is a reference diagram for explaining item attributes that are addable to deformation of scrolling items according to an exemplary embodiment.

As in the exemplary embodiments of FIGS. 15A and 15B and FIGS. 16A and 16B, to allow a user to spontaneously sense that the end of a scrolling list is reached, properties of the scrolling item may be further modified in addition to deformation of a size of the scrolling items.

According to an exemplary embodiment, a transparency of the scrolling item as illustrated in FIG. 15B, having a reduced height and an increased width, may be varied.

According to an exemplary embodiment, a color value of the scrolling item as illustrated in FIG. 15B, having a reduced height and an increased width, may be varied.

According to an exemplary embodiment, a luminosity of the scrolling item as illustrated in FIG. 15B, having a reduced height and an increased width, may be varied.

According to an exemplary embodiment, a chroma of the scrolling item as illustrated in FIG. 15B, having a reduced height and an increased width, may be varied.

FIG. 18A illustrates reference diagrams (a) through (g) for explaining a method of outputting scrolling items by deforming shapes of the scrolling items based on a scrolling distance, according to an exemplary embodiment.

Referring to reference diagram (a) of FIG. 18A, a scrolling area 900 displaying scrolling items and a scrolling list 910 including a plurality of scrolling items are displayed. The scrolling list 910 includes scrolling items A, B, C, D, E, F, G, H, I, K, and L. The scrolling area 900 may display six scrolling items, and items D through I are displayed in the scrolling area 900 in reference diagram (a) of FIG. 18A. The user may scroll from the scrolling area 900 to the left by using a control device so that the scrolling items A, B, and C that are arranged on the left side of the scrolling item D and were not seen are displayed in the scrolling area 900. Also, the user may scroll to the right side by using the control device so that the scrolling items J, K, and L that are arranged on the right side of the scrolling item I and are not seen are displayed in the scrolling area 900. A length of the scrolling list corresponds to a sum of widths of all scrolling items and is denoted by contentsize, and a length of the scrolling area 900 is denoted by Width.

HeadPos denotes a starting point of the scrolling list. When a left boundary portion of the scrolling area 900 is set to 0 as a reference, and a length of one scrolling item is set to 1, HeadPos in reference diagram (a) of FIG. 18A is -3.

Referring to reference diagram (b) of FIG. 18A, by scrolling to the right from the scrolling items as displayed as illustrated in reference diagram (a) of FIG. 18A, by using a control device, the six scrolling items G to L at the right end of the scrolling list are displayed in the scrolling area 900. In reference diagram (b) of FIG. 18A, HeadPos is -6.

Referring to reference diagram (c) of FIG. 18A, by scrolling to the left from the scrolling items as displayed as illustrated in reference diagram (b) of FIG. 18A, by using a control device, the six scrolling items B to G on the left side of the scrolling list are displayed in the scrolling area 900. In reference diagram (c) of FIG. 18A, HeadPos is -1.

Referring to reference diagram (d) of FIG. 18A, by further scrolling to the left from the scrolling items as displayed as illustrated in reference diagram (c) of FIG. 18A, by using a control device, the six scrolling items A through F at the left end the scrolling list are displayed in the scrolling area 900. HeadPos which is a starting position of the scrolling list in reference diagram (d) of FIG. 18A corresponds to the left boundary of the scrolling area 900 and is 0.

HeadPos has a value from -Contentsize + Width to 0.

In detail, when the scrolling items of the scrolling list illustrated in reference diagram (b) of FIG. 18A are scrolled up to the right end and the six scrolling items from the right end are included in the scrolling area 900, HeadPos has a minimum value. In this case, a HeadPos value is - Contentsize + Width. HeadPos has a maximum value in reference diagram (d) of FIG. 18A, that is, when the scrolling items are scrolled up to the left end in the scrolling list so that the six scrolling items from the left end of the scrolling list are included in the scrolling area 900. Here, the maximum value of HeadPos is 0. Accordingly, HeadPos may have a value from <-Contentsize + Width> to <0> in regard to scrolling.

Also, in reference diagram (d) of FIG. 18A, HeadPos is the same as DrawingHeadPos, which is a position where drawing of items starts.

However, in a display state of the scrolling items of reference diagram (d) of FIG. 18A, that is, when the left end of the scrolling list is reached at the left boundary of the scrolling area 900, and the user further scrolls to the left by using a control device, HeadPos becomes greater than 0 as shown in reference diagram (e) of FIG. 18A. Referring to reference diagram (e) of FIG. 18A, an upper portion shows a state of the scrolling list where the left end of the scrolling list reached the left edge of the scrolling area 900. In this state, when the user intends to further scroll to the left by using a control device, as shown in a lower portion of reference diagram (e) of FIG. 18A, a HeadPos value that is a starting position of the scrolling list becomes greater than 0, and as a result, DrawingHeadPos and HeadPos become different.

By determining that HeadPos becomes greater than 0 that is a value for HeadPos, it may be determined that the end of the scrolling list has been reached and that deformation of scrolling items may be started. Likewise, in the display state of the scrolling items as illustrated in reference diagram (b) of FIG. 18A, as the user performs scrolling further to the right end to determine that HeadPos becomes smaller than -Contentsize+Width, which is a range of HeadPos, it may be determined that deformation of the scrolling items may be started as the end of the scrolling list has been reached.

As described above with reference to reference diagram (e) of FIG. 18A, when scrolling is further performed from the end of the scrolling list, a position where drawing a scrolling item at the left end portion of the scrolling area 900 starts, that is, DrawingHeadPos may be adjusted. That is, to allow a user to intuitively recognize that the end of the scrolling list is reached, the position where drawing a scrolling item at the left end portion of the scrolling area 900 starts, that is, DrawingHeadPos, may be located not at the left boundary of the scrolling area 900 but slightly to the right from the left boundary.

A value of DrawingHeadPos may be obtained using the following calculation method.

```
float AutoScrollArea::calcDrawHeadPos() {
if (HeadPos < -Contentsize+Width) {// when HeadPos is smaller than -
Contentsize+Width
const float d = (-Contentsize+ Width - HeadPos);
const float t = d / Width;
return
-contentSize+Width-MOVELIMIT*interp(t); // calculate DrawHeadPos like the
```

```
adjoining formula
}
else if (HeadPos > 0) { //when HeadPos is greater than 0
 const float d = HeadPos;
const float t = d / Width;
return MOVELIMIT*interp(t);
} // calculate HeadPos like the adjoining formula
return HeadPos; // When HeadPos is not smaller than -Contentsize+Width and not
greater than 0, DrawHeadPos is the same as HeadPos.
}
return HeadPos; // when HeadPos value is not smaller than -Contentsize+Width and
not greater than 0, a DrawHeadPos value is the same as HeadPos
}
```

The above calculation method will be described in detail below.

Reference diagram (f) of FIG. 18A is a reference diagram for explaining a deformation amount of a scrolling item.

Referring to reference diagram (f) of FIG. 18A, a default height of a scrolling item is 'DEFSIZE,' and a height of a deformed scrolling item deformed according to scrolling item deformation is denoted by 'size.' Also, in a default state of the scrolling item, a y-axis position is 'DEFPOS,' and a y-axis position of the deformed scrolling item deformed according to scrolling item deformation is denoted by 'POS.' DEFORMLIMIT refers to a maximum value of an amount by which a scrolling item is deformed.

A height and a position of a deformed scrolling item according to an exemplary embodiment may be calculated, for example, as below.

$$DEFSIZE=100$$

$$DEFORMLIMIT=0.8$$

if (headpos<-contentSize+width) { // when scrolling is performed more to the right from the right end

t=(-contentSize+width-HeadPos)/width; // calculate t

}

else if (headPos>0) { // when scrolling is performed more to the left from the left end

t=HeadPos/width; //calculate t

}

size=DEFSIZE*lerp(1,DEFORMLIMIT,interp(t));// calculate size

pos=DEFPOS+(DEFAULTSIZE-size)/2    // calculate Pos

Here, lerp() is a linear interpolation function and is calculated as lerp(a,b,t)=a+t(b-a).

lerp() is a function that is used to smoothly change one value to another.

Thus, lerp(1,DEFORMLIMIT,interp(t)) is a function of returning a value at interp(t) when varying a value from 1 to DEFORMLIMIT.

Thus, when varying the size, which is the height of the deformed scrolling item, from 1 to 0.8 (the DEFORMLIMIT value set above) with respect to a default size of 100, the size may be smoothly varied by using lerp(1,DEFORMLIMIT, interp(t)). lerp(1,DEFORMLIMIT,interp(t)) will now be described below with reference to FIG. 18B.

FIG. 18B is a graph illustrating an interpolating curve Interp(t), according to an exemplary embodiment.

Interp(t) is an interpolating curve having an inclination decreasing towards 1.

According to an exemplary embodiment, t is proportional to HeadPos. For example, in the state as illustrated in reference diagram (f) of FIG. 18A, while the left side of the scrolling list corresponds to the left boundary of the scrolling area, when scrolling is performed further to the left, HeadPos is moved to the right, and if a scrolling value by which scrolling to the left is performed is small, HeadPos is also reduced, and t that is proportional to HeadPos is also reduced. Referring to FIG. 18B, when t is a relatively small value, Interp(t) has a relatively large inclination variation, and lerp(1, DEFORMLIMIT,interp(t))=1+ interp(t) (DEFORMLIMIT-1), and thus, a value of lerp is relatively abruptly varied.

Also, when a scrolling value by which scrolling to the left is performed is increased in the reference diagram (f) of FIG. 18A, HeadPos is also increased, and t which is proportional to HeadPos is also increased. Referring to FIG. 18B, when t is a relatively great value, Interp(t) has a relatively small inclination variation, and lerp(1,DEFORMLIMIT, interp(t)) = 1+ interp(t) (DEFORMLIMIT-1), and thus, lerp is varied by a relatively gentle angle.

Thus, when HeadPos deviates from a range of HeadPos by a small degree, a variation of a height of a scrolling item 'Size' is large, and the more HeadPos deviates from the range of HeadPos, the more the variation of the height of the scrolling item 'Size' is reduced, and the user may experience an increase in resistance.

Also, referring to reference diagram (f) of FIG. 18A, while the left side of the scrolling list corresponds to the left boundary of the scrolling area 900, when scrolling is performed further to the left, HeadPos is moved to the right, and here, DrawingHeadPos which is an actual starting position for drawing a scrolling item may also be changed. That is, referring to reference diagram (f) of FIG. 18A, DrawingHeadPos does not correspond to the left boundary of the scrolling area 900 and is located slightly to the right from the left boundary of the scrolling area 900. DrawingHeadPos may be calculated as below.

```
if (headPos<-contentSize+width) {// when scrolling is performed further from the right
end
t=(-contentSize+width-HeadPos)/width;
return -contentSize+width-MOVELIMIT*interp(t)
}
else if (headPos>0) {// when scrolling is performed further from the left end
t=HeadPos/width;
return MOVELIMIT*interp(t)
```

Here, MOVELIMIT denotes a constant corresponding to a maximum distance which may be moved from the end of the scrolling list, and Interp denotes an interpolating curve having a smaller inclination towards 1 as illustrated in FIG. 18B.

In the above case, for example, when scrolling is performed further from the left end, t is proportional to HeadPos, and Interp(t) is an interpolating curve having a smaller inclination towards 1.

Also, referring to reference diagram (f) of FIG. 18A, while the left side of the scrolling list corresponds to the left boundary of the scrolling area 900, when scrolling is performed further to the left, HeadPos is moved to the right, and when a scrolling value by which the scrolling to the left is performed is reduced, HeadPos is also reduced, and t that is proportional to HeadPos is also reduced. Referring to FIG. 18B, when t is a relatively small value, Interp(t) has a relatively large inclination variation, and accordingly, DrawingHeadPos = MOVELIMIT*interp(t) and which has a large inclination variation.

In the state as illustrated in reference diagram (f) of FIG. 18A, while the left side of the scrolling list corresponds to the left boundary of the scrolling area 900, when scrolling is performed further to the left, HeadPos is moved to the right, and when a scrolling value by which the scrolling to the left is performed is increased, HeadPos is also increased, and t that is proportional to HeadPos is also increased. Referring to FIG. 18B, when t is a relatively great value, Interp(t) has a relatively small inclination variation, and accordingly, DrawingHeadPos = MOVELIMIT*interp(t), which has a small inclination variation.

Thus, when HeadPos deviates from a range of HeadPos by a small degree, a variation of DrawingHeadPos is large, and the more HeadPos deviates from the range of HeadPos, the more the variation of the height of the scrolling item 'Size' is reduced. Accordingly, the user may experience an increase in resistance.

Reference diagram (g) of FIG. 18A is a reference diagram showing restoring of a deformed scrolling item according to an exemplary embodiment to its original form.

Restoring of the deformed scrolling item to its original form may be performed, for example, when a scrolling operation is not performed and HeadPos deviates from a range of HeadPos, that is, when a scrolling operation is released.

Restoring of the deformed scrolling item to its original form may be performed as below.

```
if (Headpos<-contentSize+width) {
// When scrolling is performed further from the right end, animation is performed as
```

```
below.
 value0=HeadPos; value1=-contentSize+width;
startAt=elapsedTime();
startAnimation();
}
else if (HeadPos>0) {
// When scrolling is performed further from the left end, animation is performed as
below.
value0=HeadPos; value1=0;
startAt=elapsedTime();
startAnimation();
DURATION; // Returning Animation Duration
t=elapsedTime()-startAt;
v=1; // If time elapsed has already passed, a basic value is 1.
if (t<DURATION)
v=t/DURATION;
else
stopAnimation(); //End of animation
HeadPos=lerp(value0,value1,interp(v));
```

FIGS. 19A and 19B illustrate reference diagrams for explaining a scrolling direction according to an exemplary embodiment.

Referring to FIG. 19A, a horizontal scrolling area 1000 according to an exemplary embodiment is illustrated. In the horizontal scrolling area 1000, some scrolling items 1020 through 1060 among scrolling items 1010, 1020, 1030, 1040, 1050, 1060, 1070, and 1080 of a scrolling list are displayed. According to an exemplary embodiment, the scrolling items 1010, 1020, 1030, 1040, 1050, 1060, 1070, and 1080 respectively denote service provider identifiers 1, 2, 3, 4, 5, 6, 7, and 8. A user may scroll the scrolling list in a horizontal direction, that is, in an x-axis direction by using a control device so that some of the scrolling items 1010 to 1080 are displayed in the horizontal scrolling area 1000.

In regard to a horizontal scrolling list as above, vertical scrolling may be added according to an exemplary embodiment. For example, when the scrolling item 1030 indicating a service provider identifier 3 is selected by using the control device 200, or while a cursor corresponding to the control device 200 is located on the scrolling item 1030, when the user performs vertical scrolling by using the control device 200, vertical scrolling may be generated. Vertical scrolling refers to scrolling performed by the user on the scrolling item 1030 upwardly or downwardly by using the control device 200. A vertical scrolling list corresponding to the service provider identifier 3 includes, as scrolling items, additional information 1 1030-1 and additional information 2 1030-2. In a state of FIG. 19A, when the user performs vertical scrolling with respect to the scrolling item 1030 indicating the service provider identifier 3 by using the control device 200, as illustrated in FIG. 19B, the scrolling item 1030-2 indicating additional information 2 may be displayed in the horizontal scrolling area 1000.

According to an exemplary embodiment illustrated in FIGS. 19A and 19B, the vertical scrolling list with respect to the scrolling item 1030 corresponding to the service provider identifier 3 is illustrated for convenience of description. However, the other scrolling items 1010 through 1080 may also be arranged to have respective vertical scrolling lists.

According to an exemplary embodiment, additional information corresponding to a service provider identifier may denote a list of contents provided by a service provider.

According to an exemplary embodiment, additional information corresponding to a service provider identifier may denote a program that is set as a preferred program among programs provided by a service provider.

According to an exemplary embodiment, additional information corresponding to a service provider identifier may denote information about a program that is currently provided by a service provider or information about a next program to be provided by a service provider after a currently provided program is ended.

FIGS. 20A and 20B illustrate reference diagrams for explaining a scrolling direction according to another exemplary embodiment. Referring to FIG. 20A, a vertical scrolling area 1100 is illustrated according to an exemplary embodiment. In the vertical scrolling area 1100, some scrolling items 1120 through 1160 among scrolling items 1110, 1120, 1130, 1140, 1150, 1160, and 1170 of a scrolling list are displayed in the vertical scrolling area 1100. According to an exemplary embodiment, the scrolling items 1110, 1120, 1130, 1140, 1150, 1160, and 1170 respectively denote service provider identifiers 1, 2, 3, 4, 5, 6, and 7. Thus, the user may display the scrolling items 1110 to 1170 by vertically scrolling the scrolling list by using the control device 200.

In regard to a vertical scrolling list as above, horizontal scrolling may be added according to an exemplary embodiment. For example, when the scrolling item 1140 indicating a service provider identifier 4 is selected by using the control device 200, or while a cursor corresponding to the control device 200 is located on the scrolling item 1140, when the user performs horizontal scrolling by using the control device 200, horizontal scrolling may be generated.

Horizontal scrolling refers to scrolling performed by the user on the scrolling item 1140 to the left or the right by using the control device 200. A horizontal scrolling list corresponding to the service provider identifier 4 includes, as scrolling items, additional information 1 1140-1, additional information 2 1140-2, additional information 3 1140-3, and additional information 4 1140-4. In FIG. 20A, when the user performs horizontal scrolling with respect to the scrolling item 1140 indicating the service provider identifier 4 by using the control device 200, as illustrated in FIG. 20B, the scrolling item 1140-2 indicating additional information 2 may be displayed in the vertical scrolling area 1100.

FIGS. 21A and 21B illustrate reference diagrams for explaining an example in which deformation of a cursor based on a scrolling distance is applied to a multi-window screen according to an exemplary embodiment.

A multi-window screen refers to a screen including multiple windows, and may be used to simultaneously replay a plurality of pieces of contents by dividing one display screen into multiple windows.

Referring to FIG. 21A, a multi-window screen is provided on the display 115 of the display apparatus 100. The multi-window screen illustrated in FIG. 21A includes a first window 2110, a second window 2120, a third window 2140, and a fourth window 2140. Different contents may be provided on the respective windows of the multi-window screen. For example, broadcasting content received from a tuner, content received via the Internet, and content received from an external input device or an internal storage device may be replayed through respective windows.

In a multi-window screen, the user may separately control respective windows by using the control device 200. Thus, the shape of the cursor may be deformed in response to the cursor contacting an edge of each window of the multi-window screen provided to the display 115 according to an exemplary embodiment.

For example, as illustrated in FIG. 21A, when the cursor 300 contacts an edge of the fourth window 2140 displaying thumbnail information of a YouTube video and then scrolling is further performed, the shape of the cursor 300 may be deformed. Although the left edge of the fourth window 2140 illustrated in FIG. 21A is not an edge of the screen of the display 115, in an exemplary embodiment illustrated in FIG. 21A, respective windows of the multi-window screen are each used as one individual screen, and thus, the cursor 300 may be applied by regarding the edge of the fourth window 2140, which the cursor 300 is contacting, also as an edge of the screen in FIG. 21A.

Likewise, as illustrated in FIG. 21B, also when scrolling is further performed after the cursor 300 has contacted an edge of the third window 2130 displaying channel information, the shape of the cursor 300 may also be deformed.

FIG. 22 illustrates a user interface 2200 for setting a degree of deformation of scrolling items according to an exemplary embodiment.

According to the above-described embodiment in which a size of a scrolling item is changed, a user interface allowing a user to set a degree of deformation of the scrolling item may be provided. Referring to FIG. 22, the user interface 2200 is provided on the display 115 of the display apparatus 100.

A user may set a degree of deformation of a scrolling item by controlling a DEFORMLIMIT item 2210 on the user interface 2200 for setting a degree of deformation of a scrolling item. Referring to FIG. 22, the user may set a DEFORMLIMIT value by locating a bar 2220 at a position, for example, between 0.5 to 1.0 by using the control device 200 in the DEFORMLIMIT item 2210. DEFORMLIMIT is described above with reference to reference diagram (f) of FIG. 18, and the user may minimize a height of a scrolling item by increasing the degree of deformation of the scrolling item by setting DEFORMLIMIT to a minimum value or may set a small degree of deformation of a scrolling item by setting DEFORMLIMIT to a maximum value so that a height of the deformed scrolling item is not different from a height of an original scrolling item, that is, such that no deformation is generated.

According to one or more exemplary embodiments, a user may experience spontaneously and intuitively that an end of a list is reached when a shape of a cursor or a shape of a scrolling item is deformed when performing edge scrolling.

In addition, the exemplary embodiments may also be implemented through computer-readable code and/or instructions on a medium, e.g., a computer-readable medium, to control at least one processing element to implement any above-described exemplary embodiments. The medium may correspond to any medium or media which may serve as a storage and/or perform transmission of the computer-readable code.

The computer-readable code may be recorded and/or transferred on a medium in a variety of ways, and examples of the medium include recording media, such as magnetic storage media (e.g., ROM, floppy disks, hard disks, etc.) and optical recording media (e.g., compact disc read only memories (CD-ROMs) or digital versatile discs (DVDs)), and transmission media such as Internet transmission media. Thus, the medium may have a structure suitable for storing or carrying a signal or information, such as a device carrying a bitstream according to one or more exemplary embodiments. The medium may also be on a distributed network, so that the computer-readable code is stored and/or transferred on the medium and executed in a distributed fashion. Furthermore, the processing element may include a processor or a computer processor, and the processing element may be distributed and/or included in a single device.

The foregoing exemplary embodiments are examples and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

**Claims**

1.  A display apparatus (100) comprising:

    a display (115); and
    a controller (180) configured to:

    calculate an actual position indicated by a pointing position of a control device based on a user input;
    display a cursor (300), within a scrolling area, based on the calculated actual position;
    in response to a user input for moving the cursor from within the scrolling area to outside of the scrolling area through a boundary of the scrolling area in which a plurality of content items (311-321) are displayed, determine a distance between the actual position calculated based on the user input for moving the cursor and the boundary of the scrolling area; and
    deform the shape of the cursor in response to the cursor contacting the boundary of the scrolling area and scroll the plurality of content items (311-321) displayed in the scrolling area;
    wherein a magnitude of the deformation and scrolling speed is determined based on the said determined distance.

2.  The display apparatus (100) of claim 1, wherein the cursor (300) has a circular shape, and the controller (180) is further configured to control the display (115) to deform the shape of the cursor to have an oval shape based on the said determined distance.

3.  The display apparatus (100) of claim 2, wherein the controller (180) is further configured to:

    determine whether a first direction is a horizontal direction or a vertical direction, wherein the first direction is the direction of a control device (200) from the edge of the screen;
    control the display (115) to deform the cursor (300) to have a vertically long oval shape based on the said determined distance in response to the cursor contacting the edge of the screen and the controller determining that the first direction is the horizontal direction; and
    control the display to deform the cursor to have a horizontally long oval shape based on the said determined distance in response to the cursor contacting the edge of the screen and the controller determining that the first direction is the vertical direction.

4.  A display method comprising:

    calculating an actual position indicated by a pointing position of a control device based on a user input,
    displaying a cursor (300), within a scrolling area, based on the calculated actual position,
    in response to a user input for moving the cursor from within the scrolling area to outside of the scrolling area through a boundary of the scrolling area in which a plurality of content items (311-321) are displayed, determining a distance between the actual position calculated based on the user input for moving the cursor and the boundary of the scrolling area, and
    deforming the shape of the cursor in response to the cursor contacting the boundary of the scrolling area and scroll the plurality of content items (311-321) displayed in the scrolling area,
    wherein a magnitude of the deformation and scrolling speed is determined based on the said determined distance.

5.  The display method of claim 4, further comprising:

    the cursor (300) having a circular shape, and
    deforming the shape of the cursor to have an oval shape based on the said determined distance in response to the cursor contacting the edge of the screen;
    determining whether a first direction is a horizontal direction or a vertical direction, wherein the first direction is the direction of a control device (200) from the edge of the screen;
    deforming the cursor (300) to have a vertically long oval shape based on the said determined distance in response to the cursor contacting the edge of the screen and the controller determining that the first direction is the horizontal; and
    deforming the cursor to have a horizontally long oval shape based on the said determined distance in response to the cursor contacting the edge of the screen and the controller determining that the first direction is the vertical direction.

**Patentansprüche**

1. Anzeigevorrichtung (100), umfassend:

   eine Anzeige (115); und
   eine Steuerung (180), die ausgelegt ist zum:

   Berechnen einer tatsächlichen Position, die durch eine Zeigeposition einer Steuereinrichtung angegeben wird, basierend auf einer Benutzereingabe;
   Anzeigen eines Cursors (300) in einem Scrolling-Bereich basierend auf der berechneten tatsächlichen Position;
   als Reaktion auf eine Benutzereingabe zum Bewegen des Cursors aus dem Scrolling-Bereich zu außerhalb des Scrolling-Bereichs durch eine Grenze des Scrolling-Bereichs, in dem mehrere Inhaltselemente (311-321) angezeigt werden, Bestimmen eines Abstands zwischen der tatsächlichen Position, die basierend auf der Benutzereingabe zum Bewegen des Cursors berechnet wird, und der Grenze des Scrolling-Bereichs; und
   Verformen der Form des Cursors als Reaktion darauf, dass der Cursor die Grenze des Scrolling-Bereichs kontaktiert, und Scrollen der mehreren Inhaltselemente (311-321), die im Scrolling-Bereich angezeigt werden;
   wobei ein Ausmaß der Verformung und eine Scrolling-Geschwindigkeit basierend auf dem bestimmten Abstand bestimmt werden.

2. Anzeigevorrichtung (100) nach Anspruch 1, wobei der Cursor (300) eine Kreisform aufweist und die Steuerung (180) ferner dazu ausgelegt ist, die Anzeige (115) zu steuern, die Form des Cursors so zu verformen, dass er eine ovale Form basierend auf dem bestimmten Abstand aufweist.

3. Anzeigevorrichtung (100) nach Anspruch 2, wobei die Steuerung (180) ferner ausgelegt ist zum:

   Bestimmen, ob eine erste Richtung eine horizontale Richtung oder eine vertikale Richtung ist, wobei die erste Richtung die Richtung einer Steuereinrichtung (200) vom Rand des Bildschirms ist;
   Steuern der Anzeige (115), den Cursor (300) so zu verformen, dass er eine vertikal längliche ovale Form basierend auf dem bestimmten Abstand aufweist, als Reaktion darauf, dass der Cursor den Rand des Bildschirms kontaktiert und die Steuerung bestimmt, dass die erste Richtung die horizontale Richtung ist; und
   Steuern der Anzeige, den Cursor so zu verformen, dass er eine horizontal längliche ovale Form basierend auf dem bestimmten Abstand aufweist, als Reaktion darauf, dass der Cursor den Rand des Bildschirms kontaktiert und die Steuerung bestimmt, dass die erste Richtung die vertikale Richtung ist.

4. Anzeigeverfahren, umfassend:

   Berechnen einer tatsächlichen Position, die durch eine Zeigeposition einer Steuereinrichtung angegeben wird, basierend auf einer Benutzereingabe,
   Anzeigen eines Cursors (300) in einem Scrolling-Bereich basierend auf der berechneten tatsächlichen Position,
   als Reaktion auf eine Benutzereingabe zum Bewegen des Cursors aus dem Scrolling-Bereich zu außerhalb des Scrolling-Bereichs durch eine Grenze des Scrolling-Bereichs, in dem mehrere Inhaltselemente (311-321) angezeigt werden, Bestimmen eines Abstands zwischen der tatsächlichen Position, die basierend auf der Benutzereingabe zum Bewegen des Cursors berechnet wird, und der Grenze des Scrolling-Bereichs, und
   Verformen der Form des Cursors als Reaktion darauf, dass der Cursor die Grenze des Scrolling-Bereichs kontaktiert, und Scrollen der mehreren Inhaltselemente (311-321), die im Scrolling-Bereich angezeigt werden, wobei ein Ausmaß der Verformung und eine Scrolling-Geschwindigkeit basierend auf dem bestimmten Abstand bestimmt werden.

5. Anzeigeverfahren nach Anspruch 4, ferner umfassend:

   der Cursor (300) weist eine Kreisform auf, und
   Verformen der Form des Cursors, sodass er eine ovale Form basierend auf dem bestimmten Abstand aufweist, als Reaktion darauf, dass der Cursor den Rand des Bildschirms kontaktiert;

Bestimmen, ob eine erste Richtung eine horizontale Richtung oder eine vertikale Richtung ist, wobei die erste Richtung die Richtung einer Steuereinrichtung (200) vom Rand des Bildschirms ist;

Verformen des Cursors (300), sodass eine vertikal längliche ovale Form basierend auf dem bestimmten Abstand aufweist, als Reaktion darauf, dass der Cursor den Rand des Bildschirms kontaktiert und die Steuerung bestimmt, dass die erste Richtung die Horizontale ist; und

Verformen des Cursors, sodass er eine horizontal längliche ovale Form basierend auf dem bestimmten Abstand aufweist, als Reaktion darauf, dass der Cursor den Rand des Bildschirms kontaktiert und die Steuerung bestimmt, dass die erste Richtung die vertikale Richtung ist.

**Revendications**

1. Dispositif d'affichage (100), comprenant :

   un affichage (115) ; et
   un contrôleur (180) configuré pour :

   calculer une position réelle indiquée par une position de pointage d'un dispositif de commande sur la base d'une entrée utilisateur ;
   afficher un curseur (300) à l'intérieur d'une zone de défilement sur la base de la position réelle calculée ;
   en réponse à une entrée utilisateur pour déplacer le curseur de l'intérieur de la zone de défilement vers l'extérieur de la zone de défilement à travers une limite de la zone de défilement dans laquelle une pluralité d'éléments de contenu (311 à 321) est affichée, déterminer une distance entre la position réelle calculée sur la base de l'entrée utilisateur pour déplacer le curseur et la limite de la zone de défilement ; et
   déformer la forme du curseur en réponse au fait que le curseur touche la limite de la zone de défilement et faire défiler la pluralité d'éléments de contenu (311 à 321) affichés dans la zone de défilement ;
   dans lequel la grandeur de la déformation et de la vitesse de défilement est déterminée sur la base de ladite distance déterminée.

2. Dispositif d'affichage (100) selon la revendication 1, dans lequel le curseur (300) présente une forme circulaire, et le contrôleur (180) est en outre configuré pour commander l'affichage (115) pour qu'il déforme la forme du curseur pour qu'il présente une forme ovale sur la base de ladite distance déterminée.

3. Dispositif d'affichage (100) selon la revendication 2, dans lequel le contrôleur (180) est en outre configuré pour :

   déterminer si une première direction est une direction horizontale ou une direction verticale, la première direction étant la direction d'un dispositif de commande (200) partant du bord de l'écran ;
   commander l'affichage (115) pour qu'il déforme le curseur (300) pour qu'il présente une forme ovale verticalement allongée sur la base de ladite distance déterminée en réponse au fait que le curseur touche le bord de l'écran et que le contrôleur détermine que la première direction est la direction horizontale ; et
   commander l'affichage pour qu'il déforme le curseur pour qu'il présente une forme ovale horizontalement allongée sur la base de ladite distance déterminée en réponse au fait que le curseur touche le bord de l'écran et que le contrôleur détermine que la première direction est la direction verticale.

4. Procédé d'affichage, comprenant les étapes consistant à :

   calculer une position réelle indiquée par une position de pointage d'un dispositif de commande sur la base d'une entrée utilisateur ;
   afficher un curseur (300) à l'intérieur d'une zone de défilement sur la base de la position réelle calculée ;
   en réponse à une entrée utilisateur pour déplacer le curseur de l'intérieur de la zone de défilement vers l'extérieur de la zone de défilement à travers une limite de la zone de défilement dans laquelle une pluralité d'éléments de contenu (311 à 321) est affichée, déterminer une distance entre la position réelle calculée sur la base de l'entrée utilisateur pour déplacer le curseur et la limite de la zone de défilement ; et
   déformer la forme du curseur en réponse au fait que le curseur touche la limite de la zone de défilement et faire défiler la pluralité d'éléments de contenu (311 à 321) affichés dans la zone de défilement ;
   dans lequel une grandeur de la déformation et de la vitesse de défilement est déterminée sur la base de ladite distance déterminée.

**5.** Procédé d'affichage selon la revendication 4, comprenant en outre :

le fait que le curseur (300) dispose d'une forme circulaire, et

la déformation de la forme du curseur pour qu'il présente une forme ovale sur la base de ladite distance déterminée en réponse au fait que le curseur touche le bord de l'écran ;

la détermination si une première direction est une direction horizontale ou une direction verticale, la première direction étant la direction d'un dispositif de commande (200) partant du bord de l'écran ;

la déformation du curseur (300) pour qu'il présente une forme ovale verticalement allongée sur la base de ladite distance déterminée en réponse au fait que le curseur touche le bord de l'écran et que le contrôleur détermine que la première direction est la direction horizontale ; et

la déformation du curseur pour qu'il présente une forme ovale horizontalement allongée sur la base de ladite distance déterminée en réponse au fait que le curseur touche le bord de l'écran et que le contrôleur détermine que la première direction est la direction verticale.

FIG. 1A

# FIG. 1B

FIG. 1C

# FIG. 1D

FIG. 1E

FIG. 2

# FIG. 3

TUNER — 140

COMMUNICATOR — 150
- WIRELESS LAN — 151
- BLUETOOTH — 152
- ETHERNET — 153

SENSOR — 160
- MICROPHONE — 161
- CAMERA — 162
- LIGHT RECEIVER — 163

INPUT/OUTPUT INTERFACE — 170
- HDMI — 171
- COMPONENT JACK — 172
- PC PORT — 173
- USB PORT — 174

CONTROLLER — 180
- RAM — 181
- ROM — 182
- PROCESSOR — 183
- GRAPHIC PROCESSOR — 184
- FIRST INTERFACE — 185-1
- NTH INTERFACE — 185-n
- 186

VIDEO PROCESSOR — 110
DISPLAY — 115
AUDIO PROCESSOR — 120

AUDIO OUTPUT INTERFACE — 125
- SPEAKER — 126
- HEADPHONE — 127
- S/PDIF — 128

POWER SUPPLIER — 130

STORAGE — 190

100

EP 3 032 392 B1

FIG. 4A

# FIG. 4B

200a

201

# FIG. 4C

200b

202

FIG. 4D

# FIG. 5

```
        ( START )
            │
            ▼
┌──────────────────────────────────────────┐
│     DISPLAY CURSOR ON SCREEN ACCORDING    │──── 510
│        TO INPUT OF CONTROL DEVICE         │
└──────────────────────────────────────────┘
            │
            ▼
┌──────────────────────────────────────────┐
│   DISPLAY CURSOR BY DEFORMING SHAPE OF CURSOR   │
│ BASED ON SCROLLING DISTANCE OF CONTROL DEVICE IN │──── 520
│  RESPONSE TO CURSOR CONTACTING EDGE OF SCREEN   │
└──────────────────────────────────────────┘
            │
            ▼
         ( END )
```

# FIG. 6A

# FIG. 6B

X-AXIS SCROLLING RANGE (650)

X-AXIS SCROLLING BOUNDARY (640)

ex

dx

610

600

630

620

ey

Y-AXIS SCROLLING BOUNDARY (660)

Y-AXIS SCROLLING RANGE (670)

# FIG. 7A

X-AXIS
SCROLLING
RANGE
(650)

X-AXIS
SCROLLING
BOUNDARY
(640)

ex

610

600

ey

620  630

Y-AXIS
SCROLLING
BOUNDARY
(660)

Y-AXIS
SCROLLING
RANGE
(670)

# FIG. 7B

X-AXIS
SCROLLING
RANGE
(650)

X-AXIS
SCROLLING
BOUNDARY
(640)

ex

610

600

ey dy

Y-AXIS
SCROLLING
BOUNDARY
(660)

Y-AXIS
SCROLLING
RANGE
(670)

620 630

FIG. 8

X-AXIS
SCROLLING
RANGE
(650)

X-AXIS
SCROLLING
BOUNDARY
(640)

610

600

ex

dx

ey | dy

Y-AXIS
SCROLLING
BOUNDARY
(660)

620

Y-AXIS
SCROLLING
RANGE
(670)

630

FIG. 9A

# FIG. 9B

SCROLLING DIRECTION   610

600

A   B   C   D   E   F

V * CHANGEAMOUNT   HeadPos

# FIG. 9C

# FIG. 10A

# FIG. 10B

# FIG. 11A

# FIG. 11B

# FIG. 12A

X,Y

630c

Height

Width

# FIG. 12B

X-AXIS
SCROLLING
RANGE (650)

BASE
POSITION (bx)

SCROLLING AREA

600

ex

CURSOR
(630c)

ACTUAL POINTER
POSITION (Rx,Ry)
(620)

# FIG. 13

```
                    ( START )
                        |
                        v
    +--------------------------------------------+
    |    PROVIDE ON SCREEN SCROLLING AREA         |
    |    DISPLAYING AT LEAST SOME OF PLURALITY     |---- 1310
    |    OF SCROLLING ITEMS OF SCROLLING LIST      |
    |    AND CURSOR ACCORDING TO INPUT OF          |
    |    CONTROL DEVICE                            |
    +--------------------------------------------+
                        |
                        v
    +--------------------------------------------+
    |    OUTPUT SCROLLING ITEMS BY DEFORMING       |
    |    SHAPE OF SCROLLING ITEMS BASED ON         |---- 1320
    |    SCROLLING DISTANCE OF CONTROL DEVICE      |
    |    IN RESPONSE TO CURSOR CONTACTING END      |
    |    OF SCROLLING LIST                         |
    +--------------------------------------------+
                        |
                        v
                    ( END )
```

FIG. 14A

# FIG. 14B

FIG. 15A

FIG. 15B

FIG. 16A

FIG. 16B

FIG. 17

# FIG. 18A

(a)

(b)

(c)

(d)

HeadPos = DrawingHeadPos

(e)

(f) DEFSIZE

(g)

FIG. 18B

## FIG. 19A

## FIG. 19B

FIG. 20A

SERVICE PROVIDER IDENTIFIER 1 —1110

SERVICE PROVIDER IDENTIFIER 2 —1100 / 1120

SERVICE PROVIDER IDENTIFIER 3 —1130

—1140

| ADDITIONAL INFORMATION 1 | ADDITIONAL INFORMATION 2 | SERVICE PROVIDER IDENTIFIER 4 | ADDITIONAL INFORMATION 3 | ADDITIONAL INFORMATION 4 |

1140-1   1140-2        1140-3   1140-4

SERVICE PROVIDER IDENTIFIER 5 —1150

SERVICE PROVIDER IDENTIFIER 6 —1160

SERVICE PROVIDER IDENTIFIER 7 —1170

FIG. 20B

SERVICE PROVIDER IDENTIFIER 1 —1110

SERVICE PROVIDER IDENTIFIER 2 —1100 / 1120

SERVICE PROVIDER IDENTIFIER 3 —1130

—1140-2

| ADDITIONAL INFORMATION 1 | ADDITIONAL INFORMATION 2 | SERVICE PROVIDER IDENTIFIER 4 | ADDITIONAL INFORMATION 3 | ADDITIONAL INFORMATION 4 |

1140-1        1140   1140-3   1140-4

SERVICE PROVIDER IDENTIFIER 5 —1150

SERVICE PROVIDER IDENTIFIER 6 —1160

SERVICE PROVIDER IDENTIFIER 7 —1170

FIG. 21A

FIG. 21B

FIG. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2667627 A
- US 2009235207 A